# EUROPEAN PATENT SPECIFICATION

(11) **EP 2 314 072 B1**
(45) Date of publication and mention of the grant of the patent: **27.08.2014**
(21) Application number: 09797599.9
(22) Date of filing: 16.07.2009
(51) Int. Cl.: G11B 27/32, G11B 27/10, H04N 21/854, H04N 19/597

(54) **TRACK AND TRACK-SUBSET GROUPING FOR MULTI VIEW VIDEO DECODING.**
EINTEILUNG VON SPUREN UND SPUREN-UNTERGRUPPEN FÜR MULTI-SICHT VIDEO DEKODIERUNG.
REGROUPEMENT DE PISTES ET DE SOUS-ENSEMBLES DE PISTES POUR DECODAGE DE VUES VIDEO MULTIPLES.

(30) Priority: 16.07.2008 US 81328
(43) Date of publication of application: 27.04.2011
(73) Proprietor: SISVEL International S.A., 2661 Luxembourg (LU)
(72) Inventor: HANNUKSELA, Miska, FIN-36110 Ruutana (FI); WANG, Ye-Kui, Bridgewater NJ 08807 (US)
(74) Representative: Baroni, Matteo
(86) International application number: PCT/IB2009/006263
(87) International publication number: WO 2010/007513

(56) References cited:
- WO-A1-2006/104351
- US-A1- 2008 052 306
- US-A1- 2008 052 306
- "MPEG-4 White Paper - ISO File Format", 76. MPEG MEETING;03-04-2006 - 07-04-2006; MONTREUX; (MOTION PICTUREEXPERT GROUP OR ISO/IEC JTC1/SC29/WG11),, no. N8150, 8 April 2006 (2006-04-08), XP030014642, ISSN: 0000-0340
- Grüneberg K, Schierl T., Celetto L.: "MVC/SVC storage format", SEA consortium duplicate of XP002599508, vol. D3.2, no. FP7-ICT-214063 29 January 2009 (2009-01-29), XP055054524, Retrieved from the Internet: URL:http://www.ist-sea.eu/Public/SEA_D3.2_ HHI_FF_20090129.pdf [retrieved on 2013-02-26]
- 'INTERNATIONAL STANDARD ISO/IEC 14496-12 Information technology Coding of audio-visual objects Part 12: ISO base media file format' 01 January 2005, XP055041163

## Description

### FIELD OF INVENTION

The present invention relates generally to the field of real-time multimedia data and, more specifically, to the organization of such multimedia data.

### BACKGROUND OF THE INVENTION

This section is intended to provide a background or context to the invention that is recited in the claims. The description herein may include concepts that may be pursued, but are not necessarily ones that have been previously conceived or pursued. Therefore, unless otherwise indicated herein, what is described in this section is not prior art to the description and claims in this application and is not admitted to be prior art by inclusion in this section.

The ISO Base Media File Format and its amendments, such as the SVC File Format, support the indication of characteristics of hierarchically organized bitstream subsets. For example, the characteristics of subsets of a scalable video coding (SVC) bitstream may be indicated for tiers (which are essentially similar to scalable layers) or entire tracks (which correspond to scalable layers). However, the ISO Base Media File Format lacks support for indicating different hierarchy partitionings and overlapping bitstream subsets (which have no onion-shell structure). Multiview video coding (MVC) requires both types of indications, as there is flexibility on selecting views for output.

While tracks may be associated with each other by track references and the characteristics of a track or a track subset (e.g., a tier of SVC) may be indicated, there is no mechanism in the ISO Base Media File Format or its derivatives to indicate the characteristics of a group of tracks or track subsets. Such characteristics may, for example, be the required profile, level, and decoder buffering parameters.

The ISO Base Media File Format lacks a mechanism to indicate the relation (common and differentiating factors) of a group of tracks or track subsets with another group of tracks or track subsets.

Document US 2008/052306 discloses a system and method for signaling and indicating track relationship information in media files which provide a mechanism for signaling the information of layered track groups and the information of MDC track groups, as well as a mechanism for signaling track relationship information. In local playback or unicast streaming applications, to select an independently decodable track for a certain media type, the information of alternate track groups is first found via the track relation box, and one track is selected from an alternate track group for the media type. If stream switching is desired, the switching track group information is found via the track relation box. In multicast applications with scalable or MDC streams, the tracks in a layered or MDC group are found via the track relation box and selected among all the layered or MDC groups.

Document WO 2006/104351 discloses a method of encoding multi-view video using camera parameters and a method of decoding multi-view video using the camera parameters. The method of encoding multi-view video using the camera parameters includes detecting the camera parameters from each of a plurality of video data input from a multi-view camera in predetermined video units, and adaptively encoding each of the plurality of the video data according to whether each video data has the camera parameters.

US2006/0133777 defines groups of "titles" in tracks aggregated on the basis of relevance; multi-streams can be down-mixed; Track relationships are based on a table with simple attributes (encoding, sampling frequency, number of channels, channel assignment,...), not based on joint characteristics, and track-addresses used to avoid overlapping tracks in case of same content.

**XP030014642** MPEG JTC1/SC29/WG11 N8150 "MPEG-4 White Paper - ISO File Format" defines that samples within a track have different characteristics or need to be specially identified. One of the most common and important characteristic is the synchronization point (often a video I-frame). These points are identified by a special table in each track. The nature of dependencies between track samples can also be documented. Named, parameterized sample groups permit the documentation of arbitrary characteristics that are shared by some of the samples in a track.

The invention is as defined by the appended claims.

These and other advantages and features of various embodiments of the present invention, together with the organization and manner of operation thereof, will become apparent from the following detailed description when taken in conjunction with the accompanying drawings.

### BRIEF DESCRIPTION OF THE DRAWINGS

Example embodiments of the invention are described by referring to the attached drawings, in which:
Figure 1 illustrates a multimedia file format hierarchy;
Figure 2 illustrates an exemplary box in accordance with the ISO base media file format;
Figure 3A is an exemplary box illustrating sample grouping;
Figure 3B illustrates an exemplary box containing a movie fragment including a SampletoToGroup box;
Figure 4 illustrates an exemplary MVC decoding order;
Figure 5 illustrates an exemplary MVC prdiction structure for multi-view video coding;
Figure 6 illustrates an exemplary audio/video rate share profile as a function of time;
Figure 7 illustrates an exemplary audio rate share profile as a function of available bitrate;
Figure 8 is a schematic illustration of multimedia data organization;
Figure 9 is a schematic illustration of multimedia data organization in accordance with embodiments of the present invention;
Figure 10 is a flow chart illustrating a process in accordance with embodiments of the present invention;
Figure 11 illustrates an example file of two multi-track groups with one switch relation between them in accordance with embodiments of the present invention;
Figure 12 illustrates an example format structure for a video stream with three views in accordance with embodiments of the present invention;
Figure 13 illustrates an example file with each view stored as a track in accordance with embodiments of the present invention;
Figure 14 illustrates an example file with all views stored as one track in accordance with embodiments of the present invention;
Figure 15 illustrates an example file with tracks having different number of views in accordance with embodiments of the present invention;
Figure 16 illustrates an exemplary multiview bitstream including an SEI message associated with different branches of view hierarchy in accordance with embodiments of the present invention;
Figure 17 is an overview diagram of a system within which various embodiments of the present invention may be implemented;
Figure 18 illustrates a perspective view of an example electronic device which may be utilized in accordance with the various embodiments of the present invention;
Figure 19 is a schematic representation of the circuitry which may be included in the electronic device of Fig. 18; and
Figure 20 is a graphical representation of a generic multimedia communication system within which various embodiments may be implemented.

### DETAILED DESCRIPTION OF THE VARIOUS EMBODIMENTS

In the following description, for purposes of explanation and not limitation, details and descriptions are set forth in order to provide a thorough understanding of the present invention. However, it will be apparent to those skilled in the art that the present invention may be practiced in other embodiments that depart from these details and descriptions.

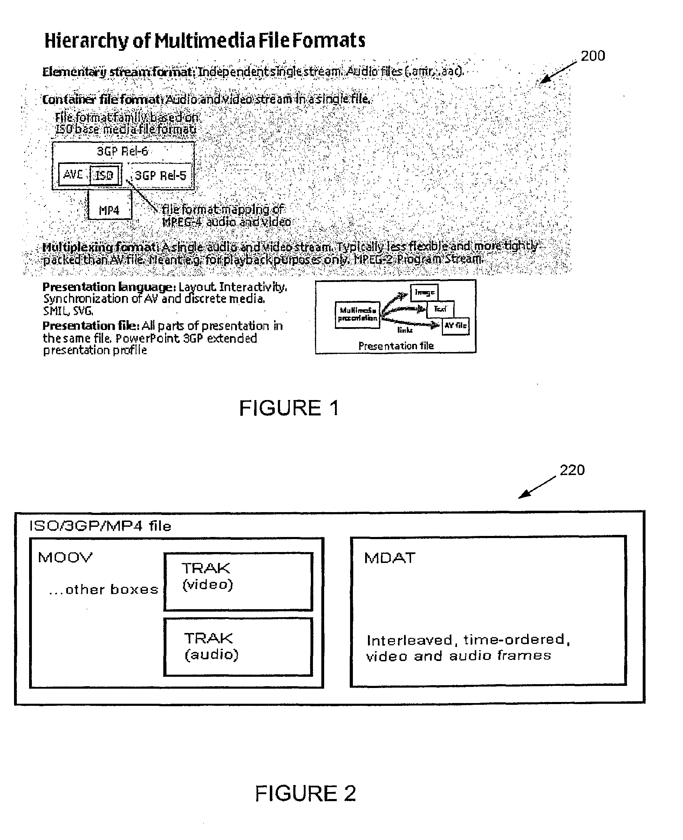

The multimedia container file format is an important element in the chain of multimedia content production, manipulation, transmission and consumption. There are substantial differences between the coding format (a.k.a. elementary stream format) and the container file format. The coding format relates to the action of a specific coding algorithm that codes the content information into a bitstream. The container file format comprises means of organizing the generated bitstream in such way that it may be accessed for local decoding and playback, transferred as a file, or streamed, all utilizing a variety of storage and transport architectures. Furthermore, the file format may facilitate interchange and editing of the media as well as recording of received real-time streams to a file. The hierarchy of multimedia file formats 200 is illustrated in Figure 1.

Available media file format standards include ISO base media file format (ISO/IEC 14496-12), MPEG-4 file format (ISO/IEC 14496-14, also known as the MP4 format), AVC file format (ISO/IEC 14496-15) and 3GPP file format (3GPP TS 26.244, also known as the 3GP format). A recent amendment to the AVC file format specified the file format for Scalable Video Coding (SVC). Ongoing work in the Moving Picture Experts Group (MPEG) is to specify the file format for Multiview Video Coding (MVC) as an amendment to the AVC file format. MPEG also specified a hint track format for FLUTE (IETF RFC 3926) and ALC (IETF RFC 3450) sessions, which became a part of Amendment 2 of the 2005 version of the ISO base media file format. The 2005 version of the ISO base media file format including all amendments and corrigenda of the 2005 version of the ISO base media file format were recently published as a new edition (edition 3) of the ISO base media file format, which will be referred to as the 2008 version of the ISO base media file format or edition 3 of the ISO base media file format. Another format derived from the ISO base media file format is the DVB File Format, recently published as a DVB Bluebook A121. The primary purpose of defining the DVB File Format is to ease content interoperability between implementations of DVB technologies, such as set-top boxes according to current (DVT-T, DVB-C, DVB-S) and future DVB standards, IP (Internet Protocol) television receivers, and mobile television receivers according to DVB-H and its future evolutions. The DVB File Format facilitates storage of all DVB content at the terminal side. The DVB file format is intended as an interchange format to ensure interoperability between compliant DVB devices. It is not necessarily intended as an internal storage format for DVB compatible devices. The file format should be able to handle any type of media and data that is being used by other DVB broadcast specifications. The DVB File Format will allow exchange of recorded media between devices from different manufacturers, exchange of content using USB mass memories or similar read/write devices, and shared access to common disk storage on a home network, as well as much other functionality.

The ISO file format is the base for derivation of all the above mentioned file formats (excluding the ISO file format itself). These file formats (including the ISO file format itself) are called the ISO family of file formats.

Figure 2 shows a simplified file structure 220 according to the ISO base media file format. The basic building block in the ISO base media file format is called a box. Each box has a header and a payload. The box header indicates the type of the box and the size of the box in terms of bytes. A box may enclose other boxes, and the ISO file format specifies which box types are allowed within a box of a certain type. Furthermore, some boxes are mandatorily present in each file, while others are optional. Moreover, for some box types, it is allowed to have more than one box present in a file. It may be concluded that the ISO base media file format specifies a hierarchical structure of boxes. According to ISO family of file formats, a file consists of media data and metadata that are enclosed in separate boxes, the media data (mdat) box and the movie (moov) box, respectively. For a file to be operable, both of these boxes must be present. The movie box may contain one or more tracks, and each track resides in one track box. A track may be one of the following types: media, hint, timed metadata. A media track refers to samples formatted according to a media compression format (and its encapsulation to the ISO base media file format). A hint track refers to hint samples, containing cookbook instructions for constructing packets for transmission over an indicated communication protocol. The cookbook instructions may contain guidance for packet header construction and include packet payload construction. In the packet payload construction, data residing in other tracks or items may be referenced, i.e. it is indicated by a reference which piece of data in a particular track or item is instructed to be copied into a packet during the packet construction process. A timed metadata track refers to samples describing referred media and/or hint samples. For the presentation one media type, typically one media track is selected. Samples of a track are implicitly associated with sample numbers that are incremented by 1 in the indicated decoding order of samples.

It is noted that the ISO base media file format does not limit a presentation to be contained in one file, but it may be contained in several files. One file contains the metadata for the whole presentation. This file may also contain all the media data, whereupon the presentation is self-contained. The other files, if used, are not required to be formatted to ISO base media file format, are used to contain media data, and may also contain unused media data, or other information. The ISO base media file format concerns the structure of the presentation file only. The format of the media-data files is constrained the ISO base media file format or its derivative formats only in that the media-data in the media files must be formatted as specified in the ISO base media file format or its derivative formats.

Movie fragments may be used when recording content to ISO files in order to avoid losing data if a recording application crashes, runs out of disk, or some other incident happens. Without movie fragments, data loss may occur because the file format insists that all metadata (the Movie Box) be written in one contiguous area of the file. Furthermore, when recording a file, there may not be sufficient amount of Random Access Memory (RAM) to buffer a Movie Box for the size of the storage available, and re-computing the contents of a Movie Box when the movie is closed is too slow. Moreover, movie fragments may enable simultaneous recording and playback of a file using a regular ISO file parser. Finally, smaller duration of initial buffering is required for progressive downloading, i.e. simultaneous reception and playback of a file, when movie fragments are used and the initial Movie Box is smaller compared to a file with the same media content but structured without movie fragments.

The movie fragment feature enables to split the metadata that conventionally would reside in the moov box to multiple pieces, each corresponding to a certain period of time for a track. In other words, the movie fragment feature enables to interleave file metadata and media data. Consequently, the size of the moov box may be limited and the use cases mentioned above be realized.

The media samples for the movie fragments reside in an mdat box, as usual, if they are in the same file as the moov box. For the meta data of the movie fragments, however, a moof box is provided. It comprises the information for a certain duration of playback time that would previously have been in the moov box. The moov box still represents a valid movie on its own, but in addition, it comprises an mvex box indicating that movie fragments will follow in the same file. The movie fragments extend the presentation that is associated to the moov box in time.

The metadata that may be included in the moof box is limited to a subset of the metadata that may be included in a moov box and is coded differently in some cases. Details of the boxes that may be included in a moof box may be found from the ISO base media file format specification.

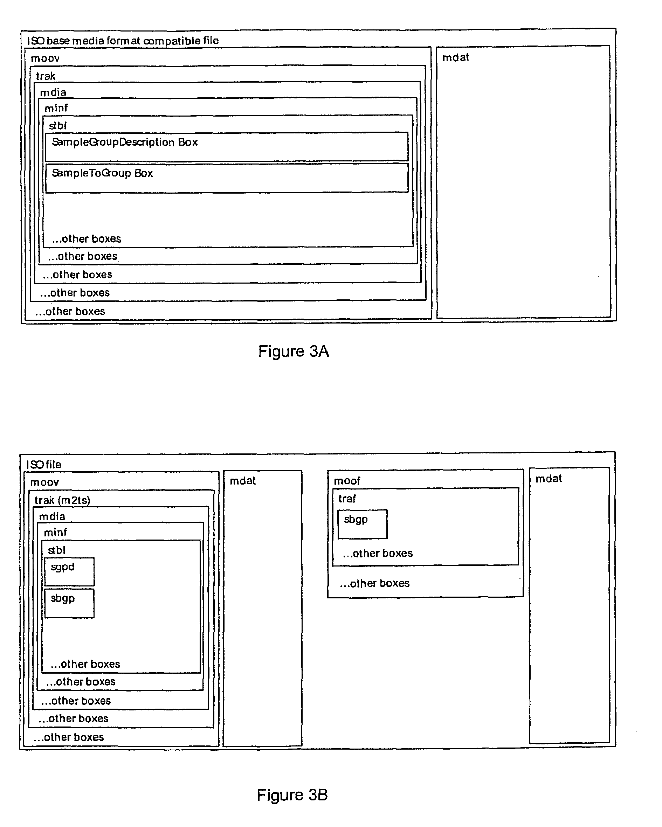

Referring now to Figures 3A and 3B, the use of sample grouping in boxes is illustrated. A sample grouping in the ISO base media file format and its derivatives, such as the AVC file format and the SVC file format, is an assignment of each sample in a track to be a member of one sample group, based on a grouping criterion. A sample group in a sample grouping is not limited to being contiguous samples and may contain non-adjacent samples. As there may be more than one sample grouping for the samples in a track, each sample grouping has a type field to indicate the type of grouping. Sample groupings are represented by two linked data structures: (1) a SampleToGroup box (sbgp box) represents the assignment of samples to sample groups; and (2) a SampleGroupDescription box (sgpd box) contains a sample group entry for each sample group describing the properties of the group. There may be multiple instances of the SampleToGroup and SampleGroupDescription boxes based on different grouping criteria. These are distinguished by a type field used to indicate the type of grouping.

Figure 3A provides a simplified box hierarchy indicating the nesting structure for the sample group boxes. The sample group boxes (SampleGroupDescription Box and SampleToGroup Box) reside within the sample table (stbl) box, which is enclosed in the media information (minf), media (mdia), and track (trak) boxes (in that order) within a movie (moov) box.

The SampleToGroup box is allowed to reside in a movie fragment. Hence, sample grouping may be done fragment by fragment. Figure 3B illustrates an example of a file containing a movie fragment including a SampleToGroup box.

The ISO Base Media File Format supports two types of editing operations: playback-time modifications through Edit List boxes and file metadata reauthoring. Edit List Boxes specify how a media composition timeline is converted to a playback timeline, and enable splitting of the media timeline to sections and mapping those sections to time-slices in the playback timeline. Hence, Edit List Boxes make it possible to omit media samples from playback, change the order of media sections in playback, and change the playback rate of media sections. However, Edit List Boxes are not supported by all players, because, for example, the flexibility of the features provided by Edit List Boxes causes challenges for player implementations. Furthermore, the use of Edit List Boxes does not enable the storage space used for the unplayed media samples or the description of the unplayed media samples in the moov box and moof boxes to be freed. Consequently, many file editors do not generally use Edit List Boxes, but rather modify files via reauthoring of file metadata.

When the multimedia presentation contained in an ISO-base-media-file-format-derived file is changed by adding or removing media data, the file metadata has to be reauthored. Many times files may be authored in such a manner that removal or adding of multimedia data afterwards does not require reauthoring the file metadata completely. For example, a complete track may be deleted in a straightforward manner if there are only few chunks containing the media samples for the track.

In multi-view video coding, video sequences output from different cameras, each corresponding to different views, are encoded into one bit-stream. After decoding, to display a certain view, the decoded pictures belong to that view are reconstructed and displayed. It is also possible that more than one view is reconstructed and displayed. Multi-view video coding has a wide variety of applications, including free-viewpoint video/television, 3D TV and surveillance. Currently, the Joint Video Team (JVT) of ISO/IEC Motion Picture Expert Group (MPEG) and ITU-T Video Coding Expert Group is working to develop a MVC standard, which is becoming an extension of H.264/AVC. Hereafter, we refer to these two (draft) standards as MVC and AVC, respectively.

The latest joint draft of MVC is in described in JVT-AA209, "Joint Draft 7.0 on Multiview Video Coding", 27th JVT meeting, Geneva, Switzerland, Apr. 2008, available from http://ftp3.itu.ch/av-arch/jvt-site/2008_04_Geneva/JVT-AA209.zip.

A multiview video bitstream may be decoded in various ways depending on how many and which views are desired for displaying. A certain set of N views may be the most preferred for output on an N-view autostereoscopic display with particular characteristics at a given range of time, while another set of N views may be the most preferred for an N-view autostereoscopic display with a different set of characteristics or at another range of time. It is also common that there are multiple preferred sets of N views which the user may select from or navigate between. The value of N may vary from 1 to the total number of views in the bitstream and should be selected at a decoding/playback time according to the features of the display. It is noted that the preferred set of N views for output may require decoding of more than N views due to inter-view dependencies.

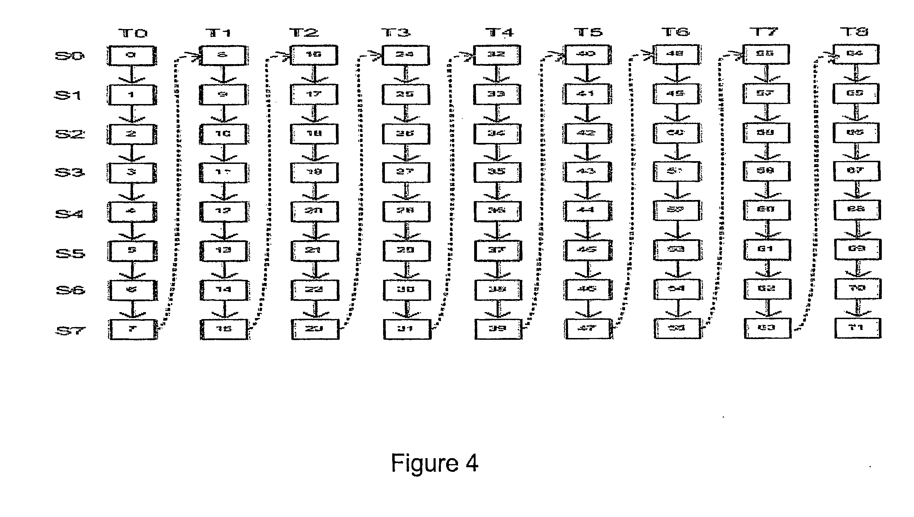

Referring now to Figure 4, an exemplary MVC decoding order (i.e. bitstream order) is illustrated. The decoding order arrangement is referred as time-first coding. Each access unit is defined to contain the coded pictures of all the views for one output time instance. Note that the decoding order of access units may not be identical to the output or display order.

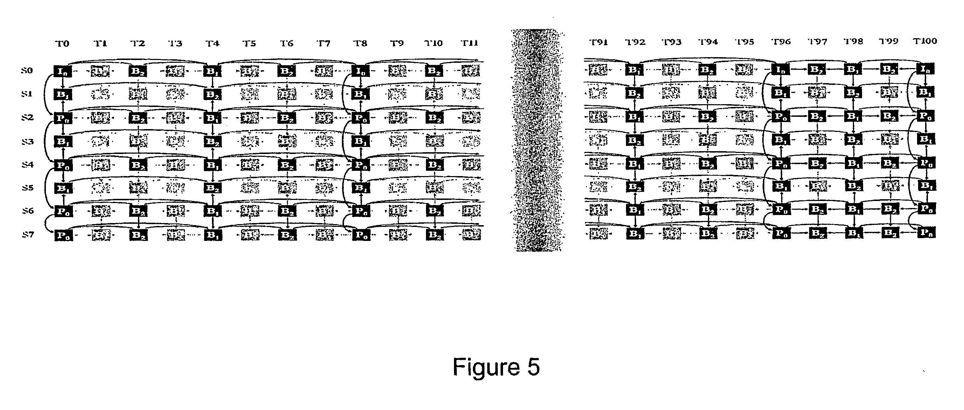

Referring now to Figure 5, an exemplary MVC prediction (including both inter-picture prediction within each view and inter-view prediction) structure for multi-view video coding is illustrated. In the illustrated structure, predictions are indicated by arrows, the pointed-to object using the point-from object for prediction reference.

In MVC, inter-view prediction is supported by only texture prediction (i.e., only the reconstructed sample values may be used for inter-view prediction), and only the reconstructed pictures of the same output time instance as the current picture are used for inter-view prediction. The fact that reconstructed sample values are used in inter-view prediction also implies that MVC utilizes multi-loop decoding. In other words, motion compensation and decoded picture reconstruction are performed for each view. H.264/AVC, SVC, and MVC bitstreams contain Network Abstraction Layer (NAL) units in decoding order either in the bytestream format or being externally framed. NAL units consist of a header and payload. The NAL unit header indicates the type of the NAL unit and whether a coded slice contained in the NAL unit is a part of a reference picture or a non-reference picture. After the first byte of the NAL unit header, an NAL unit header extension (3 bytes) is followed. The NAL unit header extension includes the syntax elements that describe the properties of the NAL unit in the context of MVC. Supplemental Enhancement Information (SEI) messages are syntax structures that may be included in H.264/AVC, SVC, and MVC bitstreams. SEI messages are not required for the decoding of sample values in output pictures but assist in related processes, such as picture output timing, rendering, error detection, error concealment, and resource reservation. A number of SEI messages are specified in H.264/AVC, SVC, and MVC. The user data SEI messages enable organizations and companies to specify SEI messages for their own use. H.264/AVC, SVC, and MVC standards contain the syntax and semantics for the specified SEI messages, but no process for handling the messages in the decoder is defined. Consequently, encoders are required to follow the relevant standard when they create SEI messages, and decoders conforming to the relevant standard are not required to process SEI messages for output order conformance. An SEI NAL unit contains one or more SEI messages. The MVC scalable nesting SEI message contains one or more ordinary H.264/AVC SEI messages and indicates the views that the message concerns. Consequently, the MVC scalable nesting SEI message enables the reuse of the syntax of H.264/AVC SEI messages for views other than the base view.

Information of the acquisition system for multiview video is essential to reconstruct the three-dimensional experience correctly on a rendering system. The parameters for a multiview video acquisition system may be categorized into intrinsic and extrinsic parameters. Intrinsic parameters indicate the characteristics of a single camera as an individual unit, independent from the other cameras of the multiview acquisition system. It is noted that intrinsic parameters may include features from any part of the camera processing chain, such as optics (and lense, in particular) and image sensor. Typical intrinsic camera parameters include but are not limited to the indication of the focal point or focal length, principal point, and radial distortion (which are well-known terms in optics and the science of photography). Extrinsic parameters indicate the features of a single camera that are related to the external world. Typical extrinsic camera parameters include but are not limited to the relative camera position in world coordinates (x, y, z) and rotation of the camera relative to all the three axes (i.e., pitch, roll, yaw/tilt). Extrinsic camera parameters are relative to chosen references, such the origo of the coordinate system. The Multiview Acquisition Information SEI message of the draft MVC standard is an example of a format for acquisition information for multiview video.

Ongoing work in the MPEG is to specify the file format for Multiview Video Coding (MVC) as an amendment to the AVC file format. It is likely that many structures included in the SVC file format will be utilized in the MVC file format too. Some of these SVC file format structures that are likely to be utilized in the MVC file format are described in the following paragraphs.

Aggregators are used to group NAL units belonging to the same sample. Aggregators use the same NAL unit header as SVC VCL NAL units or MVC VCL NAL units, but with a different value of NAL unit type. Aggregators are file format internal structures enabling efficient grouping of NAL units. Aggregators are seen as NAL units in the context of the sample structure. While accessing a sample (i.e., getting a sample from file and passing it to the decoder), Aggregators must be removed (leaving their contained or referenced NAL Units). Aggregators must not be present in a stream outside the file format. Aggregators may both aggregate, by inclusion, NAL units within them (within the size indicated by their length) and also aggregate, by reference, NAL units that follow them (within the area indicated by the additional_bytes field within them). When the stream is scanned by an AVC file reader, only the included NAL units are seen as "within" the aggregator; this permits, for example, an AVC file reader to skip a whole set of unneeded SVC VCL NAL units or MVC VCL NAL units. Similarly if AVC NAL units are aggregated by reference, the AVC reader will not skip them and they remain in-stream for that reader. When scanning the stream: a) if the aggregator is unrecognized (e.g. by an AVC reader or decoder) it is easily discarded with its included content; b) if the aggregator is not needed (i.e. it belongs to an undesired layer or view) it and its contents both by inclusion and reference are easily discarded (using its length and additional_bytes fields); and c) if the aggregator is needed, its header is easily discarded and its contents retained. An aggregator is stored within a sample like any other NAL unit. All NAL units remain in decoding order within an aggregator.

The following sample groups may be used in an SVC or MVC track to document the structure of the SVC or MVC stream and to ease obtaining information of subsets of the stream and extraction of any of the subsets. There are a number of boxes, defined below, which may occur in the sample group description, namely the Scalable Group Entry for an SVC stream and the Multiview Group Entry for an MVC stream. Each Scalable Group Entry or Multiview Group Entry documents a subset of the SVC stream or the MVC stream, respectively. Each of the subsets is associated with a tier and may contain one or more operating points. An operating point is a subset of a bitstream. An operating point for an MVC stream represents a particular set of views at a particular temporal resolution. In the MVC context, a tier represents a particular set of temporal subsets of a particular set of views. A grouping type of 'scif' or 'mvif' is used to define Scalable Group Entries or Multiview Group Entries, respectively. For each tier, there may be more than one Scalable Group Entry or Multiview Group Entry in the SampleGroupDescriptionBox of grouping type 'scif' or 'mvif', respectively. Only one of those entries is the primary definition of the tier.

Though the Scalable and Multiview Group Entries are contained in the SampleGroupDescription box, the grouping is not a true sample grouping as each sample may be associated with more than one tier, as these groups are used to describe sections of the samples - the NAL units. As a result, it is possible that there may not be a SampleToGroup box of the grouping type 'scif or 'mvif', unless it happens that a group does, in fact, describe a whole sample. Even if a SampleToGroup box of the grouping type 'scif or 'mvif' is present, the information is not needed for extraction of NAL units of tiers; instead, the map groups must always document the 'pattern' of NAL units within the samples and provide the NAL-unit-to-tier mapping information that may be needed for extraction of NAL units.

Tier Information box, Tier Bit Rate box, SVC Priority Range box, Initial Parameter Set box, Buffering box, Tier Dependency box are specified for MVC file format similarly as for the SVC file format. In particular, they may be included in Multiview Group Entries. Each scalable or multiview group entry is associated with a groupID and a tierID. The tierID entries are ordered in terms of their dependency signalled by the value of tierID. A larger value of tierID indicates a higher tier. A value 0 indicates the lowest tier. Decoding of a tier is independent of any higher tier but may be dependent on lower tier. Therefore, the lowest tier may be decoded independently, decoding of tier 1 may be dependent on tier 0, decoding of tier 2 may be dependent on tiers 0 and 1, and so on. A tier may include data from one or more layers or views in the video stream.

There shall be exactly one primary definition for each tier. For each ScalableGroupEntry or MultiviewGroupEntry, when the field primary_groupID is equal to the field groupID, the group is the primary definition of this tier, and the following applies. A TierInfoBox and SVCPriorityRangeBox shall be present. For a certain tier, if any of the optional boxes is not present, then that information is not defined for that tier (there is no inheritance of tier information). If for a certain tier no TierDependencyBox is present then this tier may depend on all tiers with lower tierID. If the InitialParameterSetBox is present then the parameter sets needed for decoding this tier and all the lower tiers it depends on are indicated with this box. If this box is not present then it is not signalled whether all the parameter sets given by the SVCDecoderConfigurationRecord or MVCDecoderConfigurationRecord are needed. If parameter set streams are used, then the InitialParameterSetBox shall not be present. The values of tierIDs are not required to be contiguous. Additionally, for each ScalableGroupEntry, when the field primary_groupID is equal to the field groupID, SVCDependencyRangeBox shall be present. Additionally, for each MultiviewGroupEntry, when the field primary_groupID is equal to the field groupID, ViewIdentifierBox shall be present.

For each specified tierID, there shall be at least one NAL unit that is associated with it. In other words, it is disallowed to specify tiers that are not used in the track. Each NAL unit in the elementary stream is associated with a tierID value as follows. First, each sample is associated with a map of groupID values through the sample grouping of type "scnm" as specified subsequently. The "scnm" sample grouping therefore indicates the association between NAL units and groupID values within each sample. Values of groupID may then be associated with values of tierID using the sample group description box of type "scif' or "mvif'. NAL units associated with a particular tierID value may require all or some of the NAL units associated with all the smaller tierID values for proper decoding operation, but will never require any NAL unit associated with a greater tierID value. (i.e., dependency will only exist in the direction of lower tiers). A Server or Player may choose a subset of tierID values that will be needed for proper decoding operation based on the values of the description fields present within the entries (e.g., frame rate, etc) of the sample group description box of type "scif" or "mvif".

The Multiview Group Entry is defined as follows.

```
 Group Type: 'mvif'
 Container: Sample Group Description Box ('sgpd')
 Mandatory: No
 Quantity: Zero or More
```

The syntax of the Multiview Group Entry is as follows.

```
 class MultiviewGroupEntry() extends VisualSampleGroupEntry ('mvif') {
   unsigned int(8) groupID;
   unsigned int(8) primary_groupID;
   unsigned int(4) reserved = 0;
   unsigned int(1) is_tl_switching_point;
   unsigned int(3) reserved = 0;
   unsigned int(8) tl_switching_distance;
   if (groupID == primary_groupID) // primary definition of tier
   {
       ViewIdentifierBox(); // Mandatory
       TierInfoBox(); // Mandatory
       TierDependencyBox(); // Mandatory
       SVCPriorityRangeBox(); // Mandatory
       //Optional Boxes or fields may follow when defined later
       TierBitRateBox(); // optional
       BufferingBox(); // optional
       InitialParameterSetBox(); // optional
       ProtectionSchemeInfoBox(); // optional
   }
 }
```

The semantics of the Multiview Group Entry are as follows.

groupID gives the identifier of the group entry. groupIDs are arbitrary values but shall be unique.

primary_groupID specifies the group containing the primary definition of this tier. If this value is equal to the value of groupID then this group is the primary definition of this tier. is_tl_switching_point when set to 1, indicates that, for the members of this group, those having the highest value of temporal_id as specified in ISO/IEC 14496-10 Annex H are temporal layer switching points. Let the highest value of temporal_id of the members of this group as tId, then the bitstream may be switched at any of the members having temporal_id equal to tId from the temporal layer with temporal_id equal to tId-1 to the temporal layer with temporal_id equal to tId, provided that the members with temporal_id equal to tId-1 indicated by tl_switching_distance have been processed (transmitted and decoded). is_tl_switching_point equal to 0 indicates that the members of this group having the highest value of temporal_id as specified in ISO/IEC 14496-10 Annex H may or may not be temporal layer switching points.

tl_switching_distance is used when is_tl_switching_point is 1. It indicates the number of samples of the temporal layer with temporal_id equal to tId-1 that must be decoded to ensure decodability of the stream at or above temporal layer tld from the switching point onward. The value 0 indicates a temporal switching point with no dependency on the lower temporal layer. This required distance for a particular sample may be reduced by a temporal layer switching distance statement in the time parallel metadata track for a specific sample.

NAL units are mapped to map groups and tiers as follows. In order to describe scalablility or view hierarchy within an SVC or MVC access unit, two kinds of sample groups are used: a) A group to describe sections of a sample. For each of the groups, a ScalableGroupEntry or a MultiviewGroupEntry exists which defines the group properties. Note that these describe tiers, not the entire stream, and therefore describe the NAL units belonging to one tier at any instant, not the entire access unit. b) A map group, that describes the mapping of each NAL unit inside an access unit to a map group (of grouping_type 'scnm'). For each different sequence of NAL units belonging to a particular map group, a ScalableNALUMapEntry exists. Within an access unit, a map group includes all NAL units of a tier.

Defining map groups requires that there is a limited number of map grouping patterns for all access units. If there is a varying number of NAL units in successive access units for a given tier, Aggregators may be used to make these varying structures consistent and to reduce the number of map groups required. The same map group definition, ScalableNALUMapEntry, is used for both SVC file format and MVC file format.

When the decoder configuration record is used for a stream which may be interpreted as either an MVC or AVC stream, the AVC decoder configuration record shall reflect the properties of the AVC compatible base layer, e.g. it shall contain only parameter sets needed for decoding the AVC base layer. A parameter set stream may be used with MVC streams, as with AVC streams. In that case, parameter sets shall not be included in the decoder configuration record. The MVCDecoderConfigurationRecord is structurally identical and semantically equivalent to an SVCDecoderConfigurationRecord.

A multiview video stream is represented by one or more video tracks in a file. Each track represents one or more views of the stream. If a view represented by a track uses another view represented by another track as an inter-view prediction reference, a track reference of type 'mvpr' shall be included in the track referring to the source track for inter-view prediction.

An MVC sample consists of one or more view components and the associated non-VCL NAL units. In order to reconstruct an access unit from samples of one or more MVC tracks, the output views are determined first. The views that are required for decoding the determined output views may be concluded from the 'mvpr' track references or Tier Dependency boxes. If several tracks contain data for the access unit, the alignment of respective samples in tracks is performed on decoding time, i.e. using the time-to-sample table only without considering edit lists. An access unit is reconstructed from the respective samples in the required tracks and tiers by arranging their NAL units in an order required by the MVC standard as presented below in a general level:
All parameter set NAL units from the associated parameter set tracks and from the associated elementary stream tracks.
All SEI NAL units from the associated parameter set tracks and from the associated elementary stream tracks.

View components ascending order of view order index value. NAL units within a view component are in their appearance order within the sample.

It is noted that Extractors specified in the SVC file format may be used to define a sample format that contains an access unit. However, such a sample format is not very suitable for MVC, because any views may be selected for output. The set of output views and the inter-view dependency hierarchy determine which views are required for decoding. The number of bitstream subsets, each suitable for outputting a different set of views, may be very large. For example, 36 stereo-view subsets may be derived from a conventionally organized 9-view MVC bitstream. If Extractors were used, a separate track for each combination of output views should be created, which would lead to an unnecessarily big file size. For a conventionally organized 9-view MVC bitstream, extractors for all stereo-view subsets would take at least about 500 kilobits/second, which causes a substantial increase in the file size. Various embodiments of the invention are anyhow applicable to a sample format in which a sample contains an access unit and Extractors are used similarly to the SVC file format.

The sample entry format for MVC is defined as follows.

```
 Box Types: `avc1' , 'avc2', `mvc1'
 Container: Sample Description Box ('stb1')
 Mandatory: Either the avc1, or avc2 or mvc1 box is mandatory
 Quantity: One or more sample entries may be present
```

If an MVC elementary stream contains a usable AVC compatible base layer, then an AVC visual sample entry ('avc1' or 'avc2') shall be used. Here, the entry shall contain initially an AVC Configuration Box, possibly followed by an MVC Configuration Box as defined below. The AVC Configuration Box documents the Profile, Level and Parameter Set information pertaining to the AVC compatible base layer as defined by the AVCDecoderConfigurationRecord. The MVC Configuration Box documents the Profile, Level and Parameter Set information pertaining to the entire stream containing the non-base views as defined by the MVCDecoderConfigurationRecord, stored in the MVCConfigurationBox.

If the MVC elementary stream does not contain a usable AVC base view, then an MVC visual sample entry ('mvc1') shall be used. The MVC visual sample entry shall contain an MVC Configuration Box, as defined below. This includes an MVCDecoderConfigurationRecord.

A priority assignment URI provides the name (in the URI space) of a method used to assign priority_id values. When it occurs in an AVC or MVC sample entry, exactly one URI shall be present, that documents the priority_id assignments in the stream. The URI is treated here as a name only; it should be de-referenceable, though this is not required. File readers may be able to recognize some methods and thereby know what stream extraction operations based on priority_id would do.

The sample entry name 'arc1' may only be used when the entire stream is a compliant and usable AVC stream as viewed by an AVC decoder operating under the configuration (including profile and level) given in the AVCConfigurationBox. The file format specific structures that resemble NAL units may be present but must not be used to access the AVC base data; that is, the AVC data must not be contained in Aggregators (though they may be included within the bytes referenced by the additional_bytes field). The sample entry name 'avc2' indicates that, in order to form the intended AVC stream, Aggregators must be examined for contained NAL Units. Aggregators may be used for MVC VCL NAL units in `avc1', 'avc2' or 'mvc1' tracks.

Any of the boxes MVCConfigurationBox, ViewScalabilityInfoSEIBox, IntrinsicCameraParametersBox, and ExtrinsicCameraParametersBox may be present in an 'avc1' or 'avc2' sample entry. In these cases, the AVCMVCSampleEntry or AVC2MVCSampleEntry definition below applies, respectively.

The following table shows for a video track all the possible uses of sample entries when an MVC elementary stream is stored in one or more tracks, configurations, and the MVC tools (excluding timed metadata, which is always used in another track):

| **sample entry name** | **with configuration records** | **Meaning** |
|---|---|---|
| 'avc1' | AVC Configuration Only | A plain AVC track without MVC NAL units; Aggregators, and tier grouping shall not be present. |
| 'avc1' | AVC and MVC Configurations | An MVC track with both AVC and MVC NAL units; Aggregators may be present; Aggregators shall not contain but may reference AVC NAL units; Tier grouping may be present. |
| 'avc2' | AVC Configuration Only | A plain AVC track without MVC NAL units; Aggregators may be present to contain and reference AVC NAL units; Tier grouping may be present. |
| 'avc2' | AVC and MVC Configurations | An MVC track with both AVC NAL units and MVC NAL units; Aggregators may be present to contain and reference both AVC and MVC NAL units; Tier grouping may be present. |
| 'mvc1' | MVC Configuration | An MVC track without AVC NAL units; Aggregators may be present to contain and reference both AVC and MVC NAL units; Tier grouping may be present. |

The syntax for the sample entries is specified as follows.

```
class MVCConfigurationBox extends Box('mvcC') {
   MVCDecoderConfigurationRecord() MVCConfig;
 }
 class AVCMVCSampleEntry() extends AVCSampleEntry (){
   ViewIdentifierBox view_identifiers; // mandatory
   MVCConfigurationBox mvcconfig; // optional
   ViewScalabilityInfoBox view_scalability; // optional
    SVCPriorityAssignmentBox method; // optional
    IntrinsicCameraParametersBox intrinsic_camera_params; // optional
   ExtrinsicCameraParametersBox extrinsic_camera_params; // optional
 }
 class AVC2MVCSampleEntry() extends AVC2SampleEntry (){
   ViewIdentifierBox view_identifiers; // mandatory
   MVCConfigurationBox mvcconfig; // optional
   MPEG4BitRateBox bitrate; // optional
   MPEG4ExtensionDescriptorsBox descr; // optional
   ViewScalabilityInfoBox view_scalability; // optional
   SVCPriorityAssignmentBox method; // optional
   IntrinsicCameraParametersBox intrinsic_camera_params; // optional
   ExtrinsicCameraParametersBox extrinsic_camera_params; // optional
 }
 // Use this if the track is NOT AVC compatible
 class MVCSampleEntry() extends VisualSampleEntry ('mvc1'){
   ViewIdentifierBox view_identifiers; // mandatory
   MVCConfigurationBox mvcconfig;
   MPEG4BitRateBox bitrate; // optional
   MPEG4ExtensionDescriptorsBox descr; // optional
   ViewScalabilityInfoBox view_scalability; // optional
   SVCPriorityAssignmentBox method; // optional
   IntrinsicCameraParametersBox intrinsic_camera_params; // optional
   ExtrinsicCameraParametersBox extrinsic_camera params; // optional
  }
```

The semantics for the fields of the sample entries are equivalent to those of the SVC file format (for method, bitrate, and descr parameters) or specified below. view_scalability contains an SEI NAL unit containing only a view scalability information SEI message as specified in ISO/IEC 14496-10 Annex H.

The Intrinsic Camera Parameters box is defined as follows.

```
 Box Types: 'icam'
 Container: Sample Entry ('avc1', 'avc2', 'mvc1')
 Mandatory: No
 Quantity: Zero or one
```

The syntax for the Intrinsic Camera Parameters box is defined as follows.

```
 class IntrinsicCameraParametersBox extends FullBox ('icam', version=0,
 flags)
 {
   unsigned int(32) prec_focal_length
   unsigned int(32) prec_principal_point
   unsigned int(32) prec_skew_factor
   unsigned int(32) exponent_focal_length_x
   signed int(32) mantissa_focal_length_x
   unsigned int(32) exponent_focal_length_y
   signed int(32) mantissa_focal length_y
   unsigned int(32) exponent_principal_point_x
   signed int(32) mantissa_principal_point_x
   unsigned int(32) exponent_principal_point _y
   signed int(32) mantissa_principal_point _y
   unsigned int(32) exponent_skew_factor
   signed int(32) mantissa_skew_factor
 }
```

The semantics for the Intrinsic Camera Parameters box are equivalent to those of the multiview acquisition information SEI message of MVC.

The Extrinsic Camera Parameters box is defined as follows.

```
 Box Types: 'ecam'
 Container: Sample Entry ('avc1', 'avc2', 'mvc1')
 Mandatory: No
 Quantity: Zero or one
```

The syntax for the Extrinsic Camera Parameters box is defined as follows.

```
 class ExtrinsicCameraParametersBox extends FullBox ('ecam', version=0,
 flags)
 }
   unsigned int(32) prec_rotation_param
   unsigned int(32) prec_translation_param
   for (j=1; j<=3; j++) { /* row */
       for (k=1; k<=3; k++) { /* column */
           unsigned int (32) exponent_r[i][j][k]
           signed int (32) mantissa_r[i][j][k]
       }
   }
  }
```

The semantics for the Extrinsic Camera Parameters box are equivalent to those of the multiview acquisition information SEI message of MVC.

The View Identifier box is defined as follows.

```
 Box Types: `vwid'
 Container: Sample Entry ('avc1', 'avc2', 'mvc1') or MultiviewGroupEntry
 Mandatory: Yes (for sample entries and the primary group definition in Multiview Group
 entries)
 Quantity: Exactly one (for sample entries and the primary group definition in Multiview
 Group entries)
           Zero for non-primary group definitions in Multiview Group entries
```

When included in a sample entry, this box indicates the views included in the track by the values of the view_id syntax element of MVC. When included in a Multiview Group entry, this box indicates the views included in the respective tier by the values of the view_id syntax element of MVC. This box also indicates the view order index for each listed view. Additionally, the box includes the minimum and maximum values of temporal_id included in the track or tier when the View Identifier box is included in a sample entry or Multiview Group entry, respectively.

The syntax for the View Identifier box is defined as follows.

```
 class ViewIdentifierBox extends FullBox ('vwid', version=0, flags)
 {
   unsigned int(16) num_views;
   for (i=0; i<num_views; i++) {
       unsigned int(6) reserved1 = 0;
       unsigned int(10) view_id;
       unsigned int(6) reserved2 = 0;
       unsigned int(10) view_order_index;
   }
   unsigned int(2) reserved3 = 0;
   unsigned int(3) min_temporal_id;
   } unsigned int(3) max_temporal_id;
 } 
```

The semantics for the View Identifier box are defined as follows.

num_views, when the View Identifer box is present in a sample entry, indicates the number of views included in the track. When the View Identifier box is present in a Multiview Group entry, num_views indicates the number of views included in the respective tier.

view_id indicates the value of the view_id syntax element of MVC for a view included in the track or tier when the View Identifier box is included in a sample entry or Multiview Group entry, respectively.

view_order_index indicates the value of the VOIdx variable, as specified in MVC, for a view included in the track or tier when the View Identifier box is included in a sample entry or Multiview Group entry, respectively

min_temporal_id, max_temporal_id take the minimum or value of the temporal_id syntax element that is present in the NAL unit header extension of the NAL units mapped to the track or tier when the View Identifier box is included in a sample entry or Multiview Group entry, respectively. For AVC streams this takes the value that is, or would be, in the prefix NAL unit.

If a track that is associated with 'avc1' or 'avc2' sample entry and contains an MVC elementary stream is included an alternate group, the other group members are alternatives to the base view contained in the track. If a track that is associated with 'mvc1' sample entry is included in an alternate group, the other group members are multiview video tracks containing equally many views than the 'mvc1' track and where each view of the 'mvc1' track has a respective view in the other tracks.

A multiple description coder produces many independent streams, known as descriptions, from one original signal. Each description typically has similar importance, any one of the descriptions is sufficient to reproduce a decoded signal of basic quality, and the reproduction quality improves as a function of received descriptions. It is therefore evident that descriptions are correlated and Multiple Description Coding (MDC) has a penalty in compression efficiency compared to single description coding. The correlation may also enable the decoder to conceal missing descriptions. A number of algorithms have been proposed for multiple description coding, utilizing spatial, frequency, or temporal domain division.

The ISO Base Media File Format specifies means to form alternate groups and switch groups as follows. alternate_group is a parameter carrying an integer value in the Track Header box that specifies a group or collection of tracks. If this field is 0 there is no information on possible relations to other tracks. If this field is not 0, it should be the same for tracks that contain alternate data for one another and different for tracks belonging to different such groups. Only one track within an alternate group should be played.or streamed at any one time, and must be distinguishable from other tracks in the group via attributes such as bitrate, codec, language, packet size etc. An alternate group may have only one member.

A typical presentation stored in a file contains one alternate group per media type: one for video, one for audio, etc. Such a file may include several video tracks, although, at any point in time, only one of them should be played or streamed. This is achieved by assigning all video tracks to the same alternate group.

All tracks in an alternate group are candidates for media selection, but it may not make sense to switch between some of those tracks during a session. One may for instance allow switching between video tracks at different bitrates and keep frame size but not allow switching between tracks of different frame size. In the same manner it may be desirable to enable selection - but not switching - between tracks of different video codecs or different audio languages.

The distinction between tracks for *selection* and *switching* is addressed by assigning tracks to switch groups in addition to alternate groups. One alternate group may contain one or more switch groups. All tracks in an alternate group are candidates for media selection, while tracks in a switch group are also available for switching during a session. Different switch groups represent different operation points, such as different frame size, high/low quality, etc.

For the case of non-scalable bitstreams, several tracks may be included in a switch group. The same also applies to non-layered scalable bitstreams, such as traditional AVC streams.

By labelling tracks with attributes it is possible to characterize them. Each track may be labelled with a list of attributes which may be used to describes tracks in a particular switch group or differentiate tracks that belong to different switch groups. The Track Selection box carried in the User Data box for a track contains a switch group parameter and an attribute_list. switch_group is an integer that specifies a group or collection of tracks. If this field is 0 (default value) or if the Track Selection box is absent there is no information on whether the track may be used for switching during playing or streaming. If this integer is not 0 it shall be the same for tracks that may be used for switching between each other. Tracks that belong to the same switch group shall belong to the same alternate group. A switch group have only one member.

attribute_list is a list of attributes. The attributes in this list should be used as descriptions of tracks or differentiation criteria for tracks in the same alternate or switch group. Each differentiating attribute is associated with a pointer to the field or information that distinguishes the track.

Document US 2008/052306, titled SYSTEM AND METHOD FOR INDICATING TRACK RELATIONSHIPS IN MEDIA FILES, proposes a Track Relation Box, which enables forming one or many groups of tracks according to a particular grouping type. Grouping types for alternate tracks; switch tracks, layered coding, and multiple description coding were specified. The alternate track grouping type enables listing of tracks belonging to particular alternate groups, i.e. there is one group of track per each value of alternate_group in the Track Header box. The alternate track grouping type provides a mechanism for parsers to identify alternate groups that may be used instead of traversing through the Track Header boxes of all tracks. The switch track grouping type provides a way to identify switch groups, which may be used instead of parsing the Track Selection box of all tracks. The layered coding grouping type provides a way to identify tracks that form a layered (scalable) bitstream. This mechanism may be used in parsers instead of traversing through the Track Reference boxes of all tracks. The multiple description coding grouping type provides a way to associated tracks containing bitstreams having a multiple description relation to each other.

The track relation box is defined as follows:

```
 Box Type: 'trel'
 Container: Movie Box ('moov')
 Mandatory: No
 Quantity: Zero or One
```

The syntax for the track relation box is as follows:

```
aligned(8) class TrackRelationBox
       extends FullBox('trel', version = 0, flags) {
       int i,j,k;
       if(flags & 0x000001 == 1) {
              unsigned int(16) num_alternate_groups;
              for(i=0; i<num_alternatve_groups; i++) {
                      int(16) alternate_group_id;
                      unsigned int(16) num_tracks_in_alternate_group;
                      for(j=0; j<num_tracks_in_alternate_group; j++)
                              unsigned int(32) alternate_track_id;
               }
       }
       if(flags & 0x000002 == 1) {
              unsigned int(16) num_switch_groups;
              for(i=0; i<num_switch_groups; i++) {
                      int(16) switch_group_id;
                      unsigned int(16) num_tracks_in_switch_group;
                      for(j=0; j<num_tracks_in_switch_group; j++)
                              unsigned int(32) switch_track_id;
               }
       }
       if(flags & 0x000004 == 1) {
              unsigned int(16) num_layered_groups;
              for(i=0; i<num_layered_groups; i++) {
                      int(16) layered_group_id;
                      unsigned int(16) num_tracks_in_layered_group;
                      for(j=0; j<num_tracks_in_layered_group; j++) {
                              unsigned int(32) layered_track_id;
                              unsigned int(16) num_dependent_on_tracks;
                              for(k=0; k<num_layered_on_tracks; k++)
                                      unsigned int(32) dependent_on_track_id;
                       }
               }
       }
       if(flags & 0x000008 == 1) {
               unsigned int(16) num_mdc_groups;
               for(i=0; i<num_mdc_groups; i++) {
                      int(16) mdc_group_id;
                      unsigned int(16) num_tracks_in_mdc_group;
                      for(j=0; j<num_tracks_in_mdc_group; j++)
                              unsigned int(32) mdc_track_id;
               }
       }
 } 
```

In the above syntax, "version" is an integer that specifies the version of the track relation box (0 as described above).

*"flags" is a 24-bit integer with flags. The following bits are defined, where bit 0 is the least significant bit, bit 1 is the second least significant bit, etc. When bit 0 is equal to 1, this indicates that information of alternate track groups is present in this box. When bit 0 is equal to 0, this indicates that information of alternate track groups is not present in this box.

When bit 1 is equal to 1, this indicates that information of switching track groups is present in this box. When bit 1 is equal to 0, this indicates that information of switching track groups is not present in this box.

When bit 2 is equal to 1, this indicates that information of layered track groups is present in this box. When bit 2 is equal to 0, this indicates that information of layered track groups is not present in this box.

When bit 3 is equal to 1, this indicates that information of MDC track groups is present in this box. When bit 3 is equal to 0, this indicates that information of MDC track groups is not present in this box.

"num_alternate_groups" indicates the number of alternate track groups that are signaled. "alternate_group_id" indicates the identifier of the i-th alternate track group that is signaled. The value is not equal to 0. Any track associated with an alternate_group_id has an alternate_group (in the track header box) equal to the alternate_group_id. Any track having an alternate_group (in the track header box) not equal to 0 is associated with an alternative_group_id. "num_tracks_in_alternate_group" indicates the number of tracks in the i-th alternate track group that is signaled. The "alternate_track_id" indicates the track ID of the j-th track in the i-th alternate track group that is signaled.

"num_switch_groups" indicates the number of switching track groups that are signaled.

"switch_group_id" indicates the identifier of the i-th switching track group that is signaled. The value is not equal to 0. For any track associated with a switch_group_id, if a track selection box is present, then the switch_group signaled in the track selection box is equal to the switch_group_id. For any track having a track selection box present, if the alternate_group is not equal to 0, the track shall be associated with a switch_group_id. "num_tracks_in_switch_group" indicates the number of tracks in the i-th switch track group that is signaled. "switch_track_id" indicates the track ID of the j-th track in the i-th switch track group that is signaled.

"num_layered_groups" indicates the number of layered track groups that are signaled. "layered_group_id" indicates the identifier of the i-th layered track group that is signaled. "num_tracks_in_layered_group" indicates the number of tracks in the i-th layered track group that is signaled. "layered_track_id" indicates the track ID of the j-th track in the i-th layered track group that is signaled.

"num_dependent_on_tracks" indicates the number of tracks on which the j-th track in the i-th layered track group is directly or indirectly dependent. "dependent_on_track_id" indicates the track ID of the k-th track on which the j-th track in the i-th layered track group is directly or indirectly dependent.

"num_mdc_groups" indicates the number of MDC track groups that are signaled. "mdc_group_id" indicates the identifier of the i-th MDC track group that is signaled. "num_tracks_in_mdc_group" indicates the number of tracks in the i-th MDC track group that is signaled. "mdc_track_id" indicates the track ID of the j-th track in the i-th MDC track group that is signaled.

In one embodiment of this track relationship box, a File Delivery Session Group box (FDSessionGroupBox) is used to list file delivery (FLUTE/ALC) hint tracks that are associated with the same group ID of the file delivery session (e.g., form different objects, such as images, of the same web page). The FDSessionGroupBox is defined as follows:

```
Box Type: 'segr'
 Container: FD Information Box (' f iin')
 Mandatory: No
 Quantity: Zero or One
```

The FD session group box is optional, although it is mandatory for files containing more than one FD hint track. It contains a list of sessions as well as all file groups and hint tracks that belong to each session. An FD session sends simultaneously over all FD hint tracks (channels) that are listed in the FD session group box for a particular FD session. Only one session group should be processed at any time. The first listed hint track in a session group specifies the base channel. If the server has no preference between the session groups, the default choice should be the first session group. The group IDs of all file groups containing the files referenced by the hint tracks shall be included in the list of file groups. The file group IDs may in turn be translated into file group names (using the group ID to name box) that may be included by the server in FDTs.

The syntax for the FDSessionGroupBox is as follows:

```
 aligned(8) class FDSessionGroupBox
       extends Box('segr') {
       unsigned int(16) num_session_groups;
       for(i=0; i < num_session_groups; i++) {
               unsigned ins(8) entry_count;
               unsigned int(8) entry_count;
               for (j=0; j < entry_count; j++) {
                      unsigned int(32) group_ID;
               }
               unsigned int(16) num_channels_in_session_group;
               for(k=0; k < num_channels_in_session_group; k++) {
                      unsigned int(32) hint_track_id;
               }
       }
 } 
```

"num_session_groups" specifies the number of session groups. "entry_count" gives the number of entries in the following list comprising all file groups that the session group complies with. The session group contains all files included in the listed file groups as specified by the item information entry of each source file. Note that the FDT for the session group should only contain those groups that are listed in this structure. "group_ID" indicates a file group with which the session group complies.

"num_channels_in_session_groups" specifies the number of channels in the session group. The value of num_channels_in_session_groups shall be a positive integer. "hint_track_ID" specifies the track ID of the FD hint track belonging to a particular session group. Note that one FD hint track corresponds to one LCT channel.

When combinations of scalable media streams are delivered over a channel with a constrained bandwidth, it is necessary to provide provisions for indicating how to dynamically perform extraction of data portions from all of the media that is jointly delivered. Therefore, a file containing one or more scalable media streams may be amended to also hold rate share information in Rate Share sample groups described by the Rate Share sample group description entries (RateShareEntry). The purpose of rate share information is to inform a server as to how media should be extracted from each scalable media stream at any instance of time. This enables a controlled or recommended way of scaling media at the server, thus enabling the generation of elementary media streams.

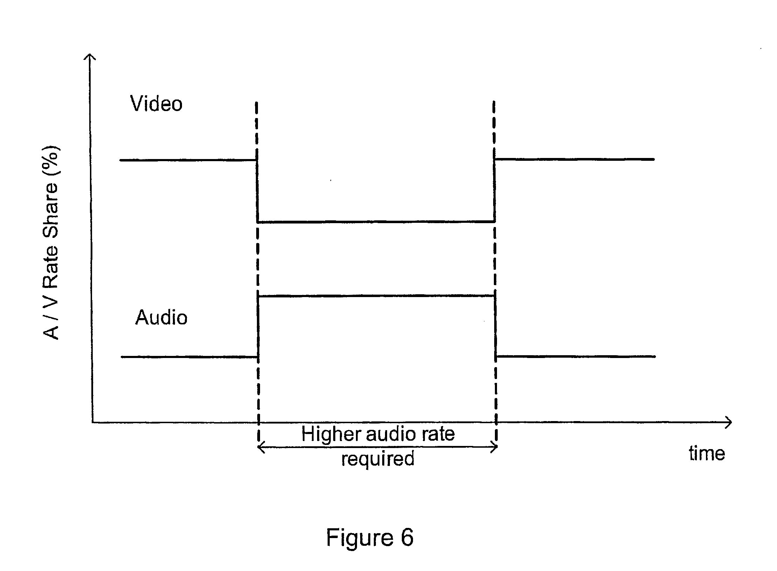

Timed rate-share information may be added to scalable media streams stored in media tracks by associating portions (i.e., time ranges) of media with rate share information records specifying a target rate share value. The target rate share value indicates a target percentage of available bitrate that should be allocated to the media in question. In the simplest scenario, only one target rate share value is specified per media and time range as illustrated in Figure 6.

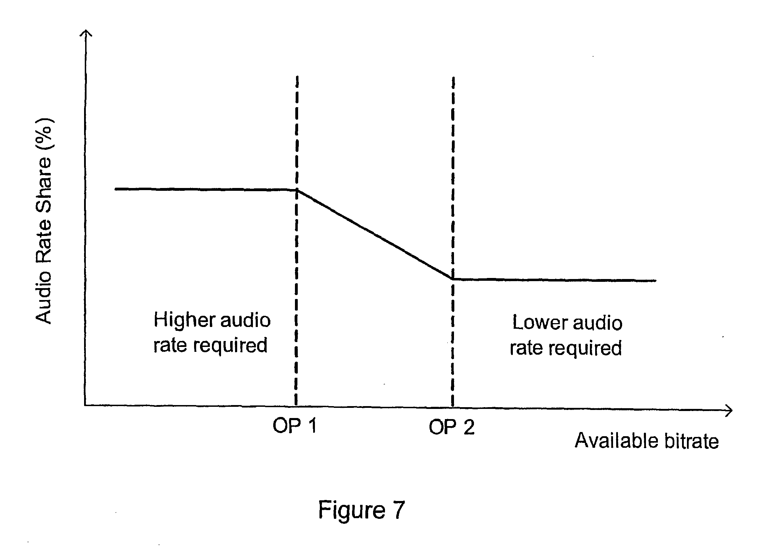

However, in order to accommodate rate share values that vary with the available bitrate, it is possible to specify more than one operation range. For example, it may be indicated that an audio stream portion requires a higher percentage of the available bitrate (than video) at low available bitrates. This is done by specifying two rate share operation points as shown in Figure 7 within a rate share sample group description entry.

Each operation point in Figure 7 specifies a target rate share. For more complex situations it is also possible to specify more operation points. In addition, the first and the last operation points specify a target rate share at those points as well as for lower and higher available bitrates, respectively. The target rate share between two operation points is specified to be in the range between the target rate shares of those operation points. It is possible to estimate the target rate share between two operation points with linear interpolation, for example.

The target rate-share indicates the target percentage of the available bitrate that should be allocated to the media in question. Given this allocation, the maximum and minimum bitrates are used to specify boundaries. Maximum bitrate gives an upper limit of the available bitrate for the specified media and time range. Alternatively, it may be used to provide an upper threshold for which the allocated bitrate is a priority for the media.

Minimum bitrate indicates a lower threshold that is deemed useful. For example, if the allocated bitrate falls below this minimum bitrate value, the recommendation to the server is to not allocate any bitrate at all to the media. The bitrate may then either be given to the other media stream(s), or an alternative stream, if available.

The sample grouping mechanism for rate share information may be used to indicate a target bitrate share between tracks. The algorithm to thin the tracks to the target bitrate is unspecified. Rate-share information defined by the sampling grouping mechanism applies to the duration of a media sample. However, as the same rate-share information is likely to apply to many consecutive samples of a track and will perhaps only vary between two or three different records, rate-share information may be efficiently stored in a track by using sample groups. Each sample of a track may be associated to (zero or) one sample group descriptions, each of which defines a record of rate-share information.

U.S. Patent Application Serial No. 11/874,138 discloses a file format structure, referred to as a "rate share operation box," for indicating which adaptation operation points for coded media are available in a file. The rate share sample grouping in the ISO base media file format is based on two fundamental assumptions:
1. It is assumed that the total bitrate of the channel through which the combined media (e.g. audio and video) should be conveyed is a piece-wise constant function of time. However, rather than indicating an optimal audio-video bitrate share for a certain total bitrate, certain applications would benefit from the indication of an adaptation path resulting into a stable audio-visual quality or experience. For example, if statistical multiplexing is used in broadcast applications, then the bitrate of an individual audiovisual service is allowed to vary, the target being to maintain a stable quality. At the same time, the total bitrate across all audiovisual service for a multiplex should remain unchanged. As of today, rate share information to maintain a stable quality cannot be indicated.
2. Only the target bitrate share between tracks is given, but no hints or cookbook instructions how to obtain the indicated share by adaptation are given. Consequently, since there are many possibilities for adapting scalable media, e.g. frame rate scaling or quality scaling, the result of the adaptation process in different implementations may differ very much. This fact diminishes the value of the rate share sample grouping.

To solve the problems above, a rate share operation box is proposed, which includes characterization of the adaptation operation points. An adaptation operation point may be associated with a rate share operation point included in the rate share sample group description entry, which is otherwise essentially unchanged compared to the ISO base media file format. Alternatively, an adaptation operation point may be associated with a particular adaptation path signaled in a newly proposed timed metadata track, which indicates different adaptation paths. In order to make the solution suitable for hint tracks and all future scalable media coding formats, a metadata sample structure that is independent of SVC is proposed. Each metadata sample gives the cookbook instructions for each associated adaptation path to create an adapted sample. The cookbook instructions indicate which parts of the referred sample data are mandatorily present in the adapted sample and which parts, such as fine granular scalable coded slice, may be freely truncated to any length since the slice header.

An adaptation operation point specifies how a coded multimedia clip, consisting of one or more coded media bitstreams, is scaled by selecting which parts of the one or more coded media bitstreams are processed. Processing of the one or more coded media bitstreams may include one or more of the following: composing of transmission packets, transmission, and decoding of the scaled media bitstreams. U.S. Patent Application Serial No. 11/874,138 describes a file format structure, referred to herein as a "rate share operation box," for indicating which adaptation operation points for coded media are available in a file.

Furthermore, the rate share operation box may include a characterization of the adaptation result for each adaptation operation point, such as whether the adaptation results into a desired total bitrate shared among all the associated tracks or whether the adaptation results into a stable quality in each associated track. Moreover, the rate share operation box may also include an identifier that indicates which algorithm was used to generate each adaptation operation point. An adaptation operation point also corresponds to an adaptation path in each track associated with the adaptation operation point. An adaptation operation point and a particular adaptation path may be characterized in the rate share operation box, e.g., in terms of the minimum and maximum bitrate achievable by the adaptation path, the axes used for adaptation, such as spatial adaptation of pictures, quality adaptation of pictures, picture rate adaptation, or any combination thereof.

An embodiment of the present invention is presented below in the form of a rate share operation box following the pseudocode notation used in the ISO base media file format.

A Movie box ('moov') contains zero or one rate share operation box ('rsop') as defined below.

```
 aligned(8) class RateShareOperationBox
   extends FullBox('rsop', version=0, 0) {
   unsigned int(16) operation_point_count;
   for (i=1; i <= operation_point_count; i++) {
       unsigned int(32) operation_description;
       unsigned int(32) track_count;
       for (j=1; j <= track_count; j++) {
           int (32) track_id;
           unsigned int(15) adaptation_path_id;
           unsigned int(1) reserved;
           unsigned int(32) rate_adaptation_algorithm;
           unsigned int(32) num_constants_in_adaptation_path;
           for (k=1; k <= num_constants_in_adaptation_path; k++)
               unsigned int(32) constant_list;
       }
       if ((operation_description & 1) == 1) {
           unsigned int(32) minimum_bitrate;
           unsigned int(32) maximum_bitrate;
       }
   }
 } 
```

The semantics of the syntax elements in the rate share operation box are as follows: operation_point_count is an integer that gives the number of operation points. operation_description indicates the output characteristics of the rate adaptation operation of this operation point. The following flags for operation_description are specified:
0x1 The cumulative output bitrate of all associated tracks is fixed to the available bitrate.
0x2 The subjective quality of each associated track remains similar throughout the duration of the track.

track_count indicates the number of tracks that are associated with this operation point. If track_count is equal to 1, then the information signalled for this operation point prescribes an adaptation rule for the single media type contained in the single identified track. If track_count is greater than 1, and all the indicated tracks contain the same media type, then the information signalled for this operation point still describes an adaptation rule for the single media type, contained in the multiple identified tracks.

track_id indicates the track_ID of the track that is associated to the operation point. adaptation_path_id shall be zero if the track_id does not refer to a timed metadata track containing generic scalable media metadata. Otherwise, adaptation_path_id indicates which adaptation path should be used in this operation point.

rate_adaptation_algorithm equal to 0 indicates that no adaptation should be done for any associated track but rather all samples of the associated track should be processed as follows. If the associated track is a hint track, packets corresponding to all hint samples should be generated. If the associated track is an SVC media track, all samples, including the potential extractor NAL units, should be parsed. For any other tracks, all samples should be parsed normally. The output of this processing shall comply with the characteristics of the operation point as indicated in this box. rate_adaptation_algorithm equal to 1 indicates that an unknown adaptation algorithm should be used to obtain the target rate share indicated by the rate share sample grouping. Other values of rate_adaptation_algorithm are unspecified in this specification but identify the algorithm that is used to obtain the adaptation paths in the referred generic scalable media metadata tracks.

num_constants_in_operation_points specifies the number of the characteristics that remain constant in this adaptation path.

constant_list is a four-character code that implicitly point to boxes or structures that specify the constant characteristics of this adaptation path. The four-character codes include those that are specified for the Track Selection Box of SVC. The constant list enables to select an appropriate operation point according to the capabilities of the device and/or software playing the file or receiving the packet streams composed according to the hint tracks included in the file.

minimum_bitrate is a nonzero value (in kilobits per second) indicating the lowest cumulative bitrate this operation point should be applied.

maximum_bitrate is a nonzero value (in kilobits per second) indicating the highest cumulative bitrate this operation point should be applied.

The sample grouping mechanism for rate share information may be used to indicate a target bitrate share between tracks. The algorithm to thin the tracks to the target bitrate is unspecified. If the track_id in an adaptation operation point refers to a track that is not a timed metadata track containing generic scalable media metadata, the track may contain sample grouping of type 'rash' as specified below.

The rate share sample group entry of the ISO Base Media File Format is extended with operation_point_id as defined below:

```
 class RateShareEntry() extends SampleGroupDescriptionEntry('rash')
 {
   unsigned int(16) operation_point_count;
   for (i=1; i <= operation_point_count; i++) {
       unsigned int(16) operation_point_id;
       unsigned int(16) target_rate_share;
       unsigned int(32) maximum_bitrate;
       unsigned int(32) minimum_bitrate;
    }
 } 
```

operation_point_id indicates the index of the adaptation operation point in the Rate share operation point box. Each value of operation_point_id corresponds to one adaptation path identified by the adaptation_path_id for the current track of the operation point. Adaptation paths are signaled with a file format structure, referred to as generic scalable media metadata track. A generic scalable media metadata track is associated to one coded media bitstream (media track) or a hint track containing structures to form transport packet from a coded media bitstream. In other words, a generic scalable media metadata track contains "cookbook" instructions that may be utilized to thin a referred track to a desired bitrate or quality. Decoding a generic scalable media metadata track results into adapted samples. If the track referred from a generic scalable media metadata track is a hint track, the adapted samples are valid packet payloads. If the referred track is a media track, the adapted samples are valid media samples, such as coded pictures or access units of video or coded audio frames.

An embodiment of the generic scalable media metadata track is provided in the following. A generic scalable media metadata track is a timed metadata track, which is identified with a 'meta' handler_type in the media box. The timed metadata track is further characterized to be a generic scalable media metadata track by including a generic scalable media metadata header box in the media information box. The generic scalable media metadata header box contains general information related to the track as specified below:

```
 aligned(8) class GenericScalableMediaMetadataHeaderBox
   extends FullBox('gshd', version = 0, 1) {
   unsigned int(15) num_adaptation_paths;
   unsigned int(1) reserved;
   for (i=1; i<=num_adaptation_paths; i++) {
       unsigned int(15) adaptation_path_id;
       unsigned int(1) truncation_flag;
   }
 } 
```

num_adaptation_paths indicates how many adaptation paths the track provides. adaptation_path_id refers to the adaptation path characterized in the Rate share operation box and identifies the adaptation path.

truncation_flag equal to 1 indicates that some parts labeled with this adaptation path identifier in some samples may be truncated. truncation_flag equal to 0 indicates that no part labeled with this adaptation path identifier in any sample may be truncated.

The sample entry of a generic scalable media metadata track is specified as follows:

```
class GenericScalableMediaMetadataSampleEntry() extends
 MetadataSampleEntry('gsmm') {
   unsigned int(2) log2_num_parts_minus_one;
   unsigned int(2) log2_num_paths_minus_one;
   unsigned int(2) log2_offset_minus_one;
   unsigned int(2) log2_size minus one;
 }
```

The fields of the sample entry are used to specify the size (8, 16, 24, or 32 bits corresponding to values 0, 1, 2, and 3 of the fields, respectively) of the syntax elements used the sample structure for the track.

A sample in the generic scalable media metadata track uses the following structure:

```
aligned(8) generic_scalable_media metadata_sample(sampleSize) {
   unsigned int((log2_num_parts_minus_one+1)*8) num_parts;
   for (i=1; i<= num_parts; i++) {
       unsigned int ((log2_num_paths_minus_one+1)* 8-1)
       num_paths_whole_part;
       unsigned int(1) truncatable_part_flag;
       for(j=1; j <= num_paths_whole_part; j++) {
           unsigned int(15) path_id_whole_part;
           unsigned int(1) reserved;
       }
       if (num_paths_whole_part > 0) {
           unsigned int((log2_offset_minus_one+1)*8) offset_whole_part;
           unsigned int((log2_size_minus_one+1)*8) num_bytes_whole_part;
       }
       if (truncatable_part_flag == 1) {
           unsigned int((log2_num_jpaths_minus_one+1)*8-1)
           num_partitionigs;
           unsigned int(1) reserved;
           for (k=1; k <= num_partitionings; k++) {
               unsigned int((log2_num_paths_minus_one+1)*8-1) num_paths;
               unsigned int(1) reserved;
               for (m=1; m <= num_paths; m++) {
                  unsigned int(15) path_id;
                  unsigned int(1) reserved;
               }
               unsigned int(8) num_subparts;
               for (m=1; m <= num_subparts; m++){
                  unsigned int((log2_offset_minus_one+1)*8) offset;
                  unsigned int((log2_size_minus_one+1)*8) num_bytes;
                  unsigned int(7) reserved;
                  unsigned int(1) free_truncation_flag;
               }
           }
       }
   }
 } 
```

The Generic scalable media sample entry contains the values of

log2_num_parts_minus_one, log2_num_paths_minus_one, log2_path_id_minus_one, log2_offset_minus_one, and log2_size_minus_one.

The metadata samples are temporally aligned to the samples in referred media or hint track (in decoding time). Each metadata sample (also called an adaptation sample) is associated to the corresponding adapted sample, which is derived from the initial adapted sample as follows.

An initial adapted sample may be derived from the coded media sample or the hint sample associated to an adaptation sample. When the associated track is a media track, an initial adapted sample is derived from an associated media sample. If the media sample does not contain aggregator or extractor NAL units as specified in the SVC file format, the initial adapted media sample is identical to the media sample. Otherwise, data referenced by the extractor NAL units is inserted to the initial adapted sample instead of the extractor NAL unit, the headers for aggregator NAL units are removed, and any remaining portions of the initial adapted media sample contains the data of the media sample as is. When the associated track is a hint track, the initial adapted sample is derived from the associated hint sample. The initial adapted sample is identical to the packet payload that is generated using the payload constructors of the sample.

An adaptation sample contains information, for each adaptation path, where parts of the initial adapted sample are included in the adapted sample. The indication of parts may be indicated with a list of byte ranges within the initial adapted sample. The use of byte ranges makes the solution ignorant of the syntax of the media sample or packet payload and hence applicable to any coding or packet payload format. An adaptation sample may also contain an indication per each indicated byte range if the byte range may be freely truncated to any length starting from the beginning of the indicated range.

The presented sample structure of generic scalable media metadata maps indicated byte ranges of the initial adapted sample to an adapted sample. Different byte ranges may be indicated for different adaptation paths. It may also be indicated whether a certain byte range is freely truncatable, i.e. that any number of bytes from the byte range starting from its beginning may be included in the adapted sample.

The semantics of the sample structure for generic scalable media metadata track are as follows:
num_parts indicates the number of parts in the initial adapted sample. No exact definition of a part is given, but it is typically a byte range within the initial adapted sample that corresponds to a unit of prediction reference, such as a coded picture in scalable video.
num_paths_whole_part indicates the number of adaptation paths in which the entire part is included.
truncatable_part_flag equal to 0 indicates that the part may not be truncated.
truncatable_part_flag equal to 1 indicates that at least one subpart of the part may be truncated.
path_id_whole_part indicates the adaptation path identifier for the part as introduced in the Rate share operation box.
offset_whole_part indicates the byte offset to the initial adapted sample from which the part starts. The first byte offset of the initial adapted sample has value 0.
num_bytes_whole_part indicates the number of bytes included in the part.
num_partitionings indicates the number of partitionings that a part is divided into subparts. Each unique way to split a part into subparts is a partitioning. For example, if a part corresponds to a fine granular scalable picture, and there are two adaptation paths specified, allowing bitrate scaling in the range of 50 to 100% and 80 to 100% of the total size of the picture, respectively, then there would be two partitionings for the part. In the first partitioning, a subpart corresponding to a byte range of 50% of the size of the picture would be indicated with free_truncation_flag equal to 0, and the remaining subpart of the picture would be marked with free_truncation_flag equal to 1. Subparts for the second partitioning would be indicated similarly.
num_paths indicates the number of adaptation paths that share the same partitioning of a part to subparts.
path_id indicates the adaptation path identifier for the subparts specified for the partitioning as introduced in the Rate share operation box.
num_subparts indicates the number of subparts. No exact definition of a subpart is given, but it is a byte range within a part that corresponds e.g. to slice header and slice data of a fine granular scalable coded slice.
offset indicates the byte offset to the initial adapted sample from which the subpart starts. The first byte offset of the initial adapted sample has value 0.
num_bytes indicates the number of bytes included in the subpart.
free_truncation_flag equal to 0 indicates that the subpart shall not be truncated.
free_truncation_flag equal to 1 indicates that the subpart may be truncated to any length by excluding samples starting from the end of the subpart.

An adapted sample is created as follows. Let currPathId be equal to the identifier for the desired adaptation path. For a sample that contains data for the desired adaptation path, as indicated by rate-sharing information sample group, the following process is performed. For each indicated part, the list of path_id_whole_part is first compared to currPartId. If there is a value of path_id_whole_part equal to currPartId, then the whole part indicated by the values of offset_whole_part and num_bytes_whole_part is included in the adapted sample. If there is no value of path_id_whole_part equal to currPartId and truncatable_part_flag is equal to 1, a loop of indicated partitionings to subparts is executed until a value of path_id equal to currPathId is found. Then, each subpart, indicated by the values of offset and num_bytes, is included in the adapted sample. If further truncation of the adapted sample is required to meet a certain bit budget, for example, those subparts for which free_truncation_flag is equal to 1 are truncated to a desired length.

The adapted samples form an adapted track. If the referred track is a hint track, the adapted samples are valid packet payloads. If the referred track is a media track, the adapted samples are valid media samples.

It should be noted that coded samples in video coding are typically coded pictures or access units. Coded samples in audio are typically coded audio frames. In addition, as described above, no guarantee as to stream validity is given if the simple_priority_id threshold is changed in the middle of a coded video sequence (i.e. between IDR access units). The same holds true for adaptation paths proposed in this invention. In order to indicate valid switching points between adaptation paths, the sample grouping mechanism for adaptation path switch points is used to indicate the adapted samples which may be used to switch from one adaptation path to another. The need for this sample grouping mechanism arises from the fact that SVC utilizes single-loop decoding, i.e. reference pictures decoded only for the highest decoded layer. Consequently, switching between layers is not possible at arbitrary locations, as at some locations the reference pictures of the layer to be switched have not been decoded. This sample grouping mechanism may therefore be used to indicate layer switching points or, more generally, switch points between adaptation paths.

If the adaptation path switch sample group description is present, each sample of a track is mapped to one adaptation path switch point entry specified below. Zero or one sample-to-group box ('sbgp') for the grouping type 'tpsw' may be contained in the sample table box ('stbl') of a Generic scalable media metadata track. The adaptation path switch point sample group entry is defined below:

```
 class AdaptationPathSwithPointEntry() extends
 SampleGroupDescriptionEntry('tpsw')
 {
   unsigned int(8) num_refresh;
   for (i=1; i<=num_refresh; i++) {
       unsigned int(15) refresh_adaptation_path_id;
       unsigned int(1) reserved;
   }
 } 
```

The semantics of the adaptation path switch point sample group entry are as follows: num_refresh indicates the number of adaptation paths that may be switched to at this sample when any adaptation path was previously used in the generation of adapted samples.

refresh_adaptation_path_id indicates the identifiers for those adaptation paths that may be switched to when any adaptation path was previously used in the generation of adapted samples.

A device, a software program, a component, or any other appropriate unit processing a file with a rate share operation box may choose a desired adaptation operation point. The choice made is based upon how the constraints and capabilities of the device and the potential receiving unit match with the characteristics of the adaptation operation point or the desired algorithm with which the adaptation operation point was calculated.

An example system for choosing an adaptation operation point is described as follows. A streaming server has access to a file containing a rate share operation box. The file contains a non-scalable audio bitstream and a scalable video bitstream, which is scalable in terms of quality as well as temporally. Two adaptation operation points are indicated in the rate share operation box, both targeted for sharing a total bitrate between audio and video. Each adaptation operation point refers to a pair of hint tracks, a hint track for audio and another hint track for video. The rate share operation box indicates that in the first adaptation operation point, the video is scaled temporally, while quality-wise scaling is used in the second adaptation operation point. A one-to-one (i.e., unicast) streaming session is established between a recipient and the server. Both temporal and quality-wise options are announced from the server to the recipient. The recipient unit may include a user interface switch to choose the user's preference whether frame rate (temporal scaling) or picture fidelity (quality scaling) is preferred. Based on the user's choice, the recipient unit indicates to the server which adaptation path should be followed. The server then creates packets based on the appropriate hint track and adaptation path indicated by the recipient.

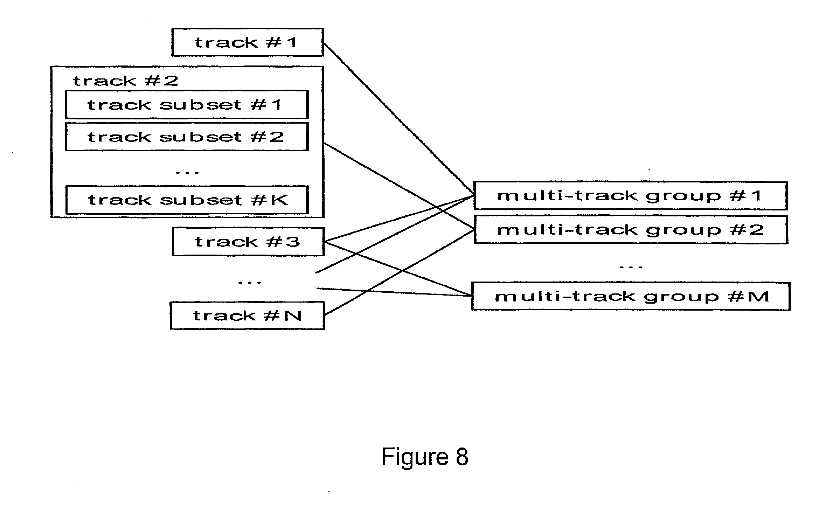

Thus, Figure 8 illustrates a simplified summary of the above-described techniques for handling tracks, whcih enable organizing media data into tracks, identifying track subsets, providing characteristics of tracks and track subsets, and organizing tracks into multi-track groups according to an identified grouping criteria.

The timed media data (as well as timed meta data) is logically organized in tracks. Each track provides a representation of media content that may be decoded and presented. Various types of metadata is provided for a track in the Track Header box and its siblings.

The Track Selection box provides attributes that describe the contents of the track or differentiate the contents of the track from other tracks in the same alternate group (see below). Samples in the track are described by the provided sample entries.

Subsets may be provided for tracks. A track subset identifies and is associated with a subset of a media data for the entire track. A track subset provides a representation of media content that may usually be decoded and presented.

As noted above, the ISO Base Media File Format and its amendments, such as the SVC File Format, support the indication of characteristics of hierarchically organized bitstream subsets. For example, the characteristics of subsets of a scalable video (SVC) bitstream may be indicated for tiers (which are essentially similar to scalable layers) or entire tracks (which correspond to scalable layers). However, the ISO Base Media File Format lacks support for indicating different hierarchy partitionings and overlapping bitstream subsets (which have no onion-shell structure). Multiview video coding requires both types of indications, as there is flexibility on selecting views for output.

While tracks may be associated with each other by track references and the characteristics of a track or a track subset (e.g., a tier of SVC) may be indicated, there is no mechanism in the ISO Base Media File Format or its derivatives to indicate the characteristics of a group of tracks or track subsets. Such characteristics may, for example, be the required profile, level, and decoder buffering parameters.

The ISO Base Media File Format lacks a mechanism to indicate the relation (common and differentiating factors) of a group of tracks or track subsets with another group of tracks or track subsets. Such a mechanism would be useful for selecting a group of tracks or track subsets for processing while ignoring other similar groups. A group of tracks or track subsets may be required to indicate, for example, the desired output views of a multiview video stream.

Multiview video bitstreams may be stored in a container file in various ways ranging from storing one view per one track to storing all views per a single track. There is no mechanism in the ISO Base Media File Format family of file formats to indicate the relation of a subset of a track with another subset of a (potentially other) track.

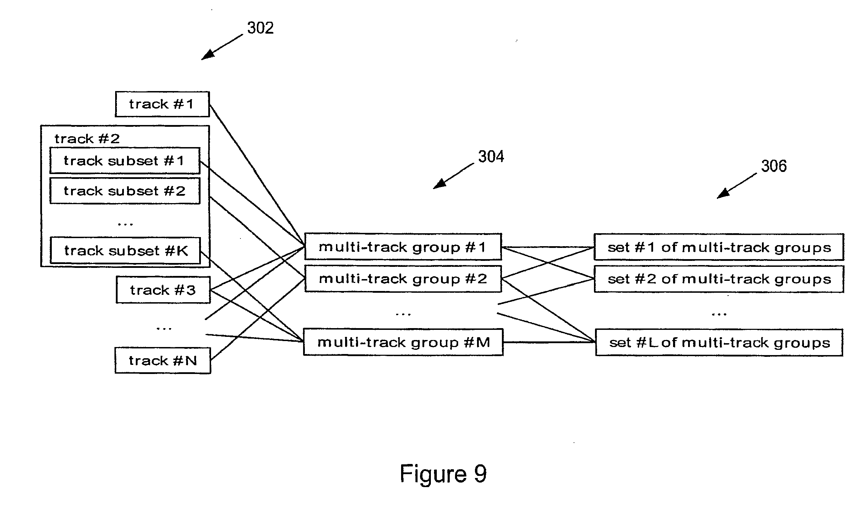

In accordance with embodiments of the present inveniton, a mechanism for grouping multi-track groups into sets of multi-track groups is provided. Embodiments of the present invention indicate joint characteristics and grouping criteria for a set of multi-track groups and indicate relations between sets of multi-track groups. An example embodiment of the present invention is schematically illustrated in Figure 9.

In accordance with embodiments of the present invention, grouping multi-track groups into sets of multi-track groups may be provided. Further, indicating joint characteristics and grouping criteria for a set of multi-track groups may be enabled. Relations between sets of multi-track groups may be indicated and a multi-track group may be formed on the basis of a track subset.

It is noted that values K, L, M, and N in Figure 9 may be any positive integer value and are independent of each other. The "#" in Figure 9 represents the number or the identifier for the respective file format structure.

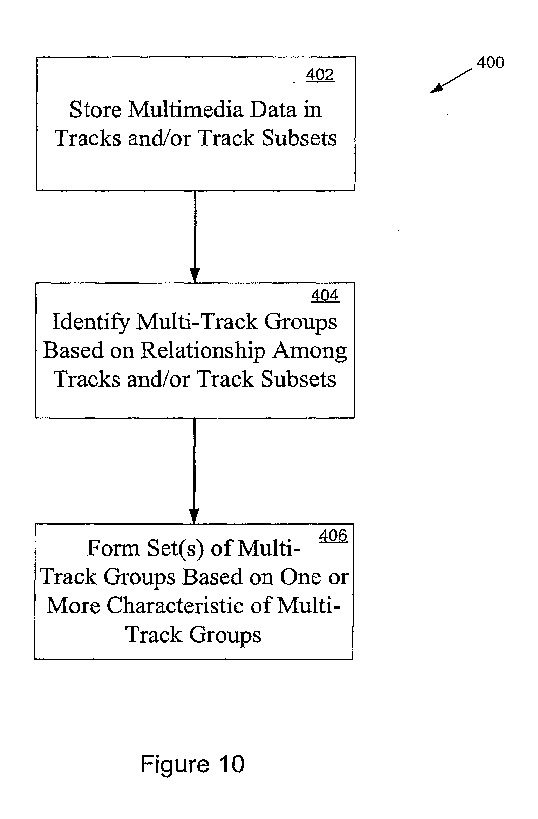

Referring now to Figure 10, a flowchart illustrates an example process for organizing multimedia data. In accordance with the embodiments of the present invention, the illustrated process 400 stores real-time multimedia data in a plurality of tracks and/or track subsets (block 402). The tracks and/or track subsets are illustrated in Figure 9 by the reference numeral 302. Referring again to Figure 10, one or more multi-track groups of tracks and/or track subsets are identified based on relationships among the tracks and/or track subsets. (block 404). In the embodiment illustrated in Figure 9, the groups are illustrated by the reference numeral 304. The identification of the groups may include storing or transmitting information related to the groups, for example. In certain embodiments of the present invention, the process 400 may further include forming at least one set of multi-track groups (block 406). The sets of the multi-track groups may be associated with one or more characterisitics of the multi-track groups. In Figure 9, the sets of multi-track groups are illustrated by the reference numeral 306.

Embodiments of the present invention address multiview video and multiview audio. In particular, multiple views of the same content may be the grouping criteria for a multi-track group. The characteristics of a multi-track group specified for a multiview video or multiview audio may be indicated. Further, embodiments of the present invention may provide for grouping of more than one multi-track group into a set of multi-track groups having similar characteristics from multiview media rendering, coding, or capturing point of view. The joint multiview characteristics of a set of multi-track groups and multiview relations between sets of multi-track groups may be indicated.

An example implementation of embodiments of the present invention are described below in terms of syntax and semantics relative to the ISO Base Media File Format. In addition, multi-track group boxes are derived for MVC.

In accordance with embodiments of the present invention, an abstract Multi-Track Group box, which is used to group tracks or track subsets and indicate the relations between those, is provided. The grouping criteria are indicated by the four-character code of the box inherited from the Multi-Track Group box. In one embodiment, one grouping criterion for multiview video is described, but others may be designed as well, for example, for multiple description coding. Four-character code "mvcg" is used for the multi-track group for multiview video. The listed tracks or track subsets therein indicate the intended output views. A track subset may be, for example, a tier defined by the sample grouping mechanism.

In accordance with embodiments of the present invention, a Multi-Track Group Relation box is used to indicate the relations between indicated multi-track groups. The main criterion to list a certain set of multi-track groups is indicated by the four-character code of the box inherited from the Multi-Track Group Relation box. In accordance with embodiments of the present invention, one criterion may be switch ('swtc'), which indicates that only one of the indicated multi-track groups should be processed (played or transmitted) at one time and a switch between the multi-track groups is allowed at arbitrary time, if needed. Other criteria may be implemented as well.

The relations of tracks or track subsets within a multi-track group as well as the relations between multi-track groups with a derived Multi-Track Group Relation box are indicated by a Relation Attribute box ("ratr"). In one embodiment, there are two types of relations: those that are common for all pointed units and those that differentiate the pointed units. In order to enable straightforward parsing of the multi-track grouping information, all the multi-track group boxes and multi-track group relation boxes may be contained in one Multi-Track Group Container box ("mtgc"), which is included in the Movie box ("moov").

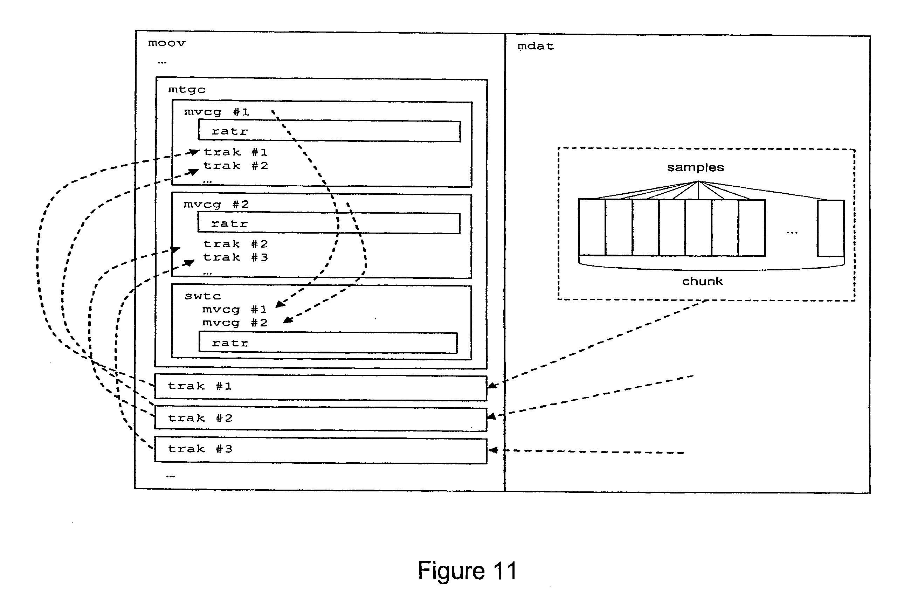

Referring now to Figure 11, a simplified example of a file with two Multi-Track Group boxes for multiview video, which refer to partly different tracks, is illustrated. In this example, one track is formed for one view of the multiview bitstream. A Switch Multi-Track Group Relation box is included to indicate the similarities and differences between the multiview streams formed by the two multi-track groups. The dashed arrow in Figure 11 indicates a reference.

The Relation Attribute Box is defined as follows:

```
 Box Type: 'ratr'
 Container: A derived box from Multi-Track Group box or Multi-Track Group
 Relation box
 Mandatory: No
 Quantity: Zero or one
```

When the Relation Attribute box is contained in a Multi-Track Group box, it indicates the relation of the tracks or track subsets of the respective multi-track group with each other. When the Relation Attribute box is contained in a Multi-Track Group Relation box, it indicates the relation of the multi-track groups with each other. For the semantics of the Relation Attribute box, a unit is specified as a track or a track subset when the Relation Attribute box is contained in a Multi-Track Group box and as a multi-track group when the Relation Attribute box is contained in a Multi-Track Group Relation box.

The syntax and the semantics of the syntax elements in the Relation Attribute Box are as follows:

```
 aligned(8) class RelationAttributeBox
   extends FullBox('ratr', version = 0, flags) {
   unsigned int(16) reserved;
   unsigned int(16) num_common_attributes;
   for (i=0; i<num_common_attributes; i++)
       unsigned int(32) common_attribute;
   unsigned int(16) reserved;
   unsigned int(16) num_differentiating_attributes;
   for (i=0; i<num_differentiating_attributes; i++)
       unsigned int(32) diffentiating_attribute;
 }
```

common_attribute and differentiating_attribute are selected from the list below. Attributes that may be used as a differentiating attribute are associated with a pointer to the distinguishing field or information.

| *Name* | *Attribute* | *Pointer* |
|---|---|---|
| Temporal scalability | 'tesc' | |
| Fine-grain SNR scalability | 'fgsc' | |
| Coarse-grain SNR scalability | 'cgsc' | |
| Spatial scalability | 'spsc' | |
| Region-of-interest scalability | 'resc' | |
| Codec | 'cdec' | Sample Entry (in Sample Description box of media track) |
| Profile | 'prfl' | Codec dependent, usually present in the decoder configuration record. |
| Level | 'level' | Codec dependent, usually present in the decodor configuration record. |
| Screen size | 'scsz' | Width and height fields of Visual Sample Entries. |
| Max packet size | 'mpsz' | Maxpacketsize field in RTP Hint Sample Entry |
| Media type | 'mtyp' | Handlertype in Handler box (of media track) |
| Media language | 'mela' | Language field in Media Header box |
| Bitrate | 'bitr' | Total size of the samples in the track divided by the duration in the track header box |
| Frame rate | 'frar' | Number of samples in the track divided by duration in the track header box |
| Number of output views | 'nvws' | Number of entries in the Multi-Track Group Box for Multiview Video ('mvcg') |
| Intrinsic camera parameters | 'icam' | 'avc1', 'avc2' or 'mvc1' Sample Entry (in Sample Description box of media track). If used as a common attribute, the intrinsic camera parameters of respective views between associated units are identical. If used as a differentiating attribute, the intrinsic camera parameters of respective views between associated units differ at least partly. |
| Extrinsic camera parameters | `ecam' | 'avc1', 'avc2', or 'mvc1' Sample Entry (in Sample Description box of media track). If used as a common attribute, the relative extrinsic camera parameters of respective views between associated units are identical. That is, the distance of cameras and their rotation relative to each other matches in the associated units. If used as a differentiating attribute, the relative extrinsic camera parameters of respective views between associated units differ at least partly. |

All units share the same common attributes or the common attributes jointly characterize all units. A differentiating attribute indicate that at least one unit differs from the others based on this attribute. The pointer of a differentiating attribute indicates the location of the information that differentiates one unit from other units with the same attribute.

The Multi-Track Group Container Box is defined as follows:

```
 Box Type: 'mtgc'
 Container: Movie Box ('moov')
 Mandatory: No
 Quantity: Zero or one
```

This box contains typed multi-track group boxes. The syntax and the semantics of the syntax elements in the Multi-Track Group Container Box are as follows:

```
 aligned(8) class MultiTrackGroupContainerBox
   extends FullBox('mtgc', version = 0, flags) {
 }
```

The Multi-Track Group Box is defined as follows:

```
 Box Type: registered for each multi-track grouping type
 Container: Multi-Track Group Container box ('mtgc')
 Mandatory: No
 Quantity: Zero or more
```

The syntax and the semantics of the syntax elements in the Multi-Track Group Box are as follows:

```
aligned(8) class MultiTrackGroupBox (unsigned int(32)
 multi_track_group_type) extends FullBox(multi_track_group_type, version
 = 0, flags) {
   unsigned int(32) multi_track_group_id;
   unsigned int(16) num_entries;
   for(i=0; i<num_entries; i++) {
       unsigned int(8) entry_type;
       if (entry_type == 0)
           unsigned int(32) track_id;
       else if (entry_type ==1) {
           unsigned int(32) track_id;
           unsigned int(16) tier_id;
       }
       else if (entry_type == 2) {
           unsigned int(32) track_id;
           unsigned int(32) grouping_type;
           unsigned int(8) grouping_flags;
           if (grouping_flags & 1)
               unsigned int(32) grouping_type_parameter;
           unsigned int(32) num_group_description_indexes;
           for (j=0; j<num_group_description_indexes; j++)
               unsigned int(32) group_description_index;
       }
       else if (entry_type == 3) {
           unsigned int(32) track_id;
           unsigned int(8) priority_layer;
       }
       else if (entry_type == 4) {
           unsigned int(32) track_id;
           unsigned int(8) priority_assignment_method_index;
           unsigned int(2) reserved;
           unsigned int(6) max_priority_id;
       }
       else if (entry_type == 5) {
           unsigned int(32) track_id;
           unsigned int(32) num_subsample_entries;
           for (j=0; j<num_subsample_entries; j++) {
               unsigned int(8) min_subsample_priority;
               unsigned int(8) max_subsample_priority;
               unsigned int(8) discardable_required;
               unsigned int(32) mask_one_bit_required;
               unsigned int(32) mask_zero_bit_required;
           }
       }
       else if (entry_type == 6) {
           unsigned int(32) track_id;
           unsigned int(16) max_degradation_priority;
       }
       else if (entry_type == 7) {
           unsigned int(32) track_id;
           unsigned int(15) adaptation_path_id;
           unsigned int(1) reserved;
       }
    }
   RelationAttributeBox relation_attribute_box;
 } 
```

multi_track_group_id provides a unique identifier for the multi-track group within the file. relation_attribute_box contains the relations between the indicated tracks or track subsets. num_entries is the number of tracks and track subsets included in this multi-track group.

entry_type indicates which type of a track or track subset follows. The following values of entry_type are specified:
0 - an entire track
1 - a tier within a track
2 - samples associated with a particular a group of a particular sample grouping
3 - a priority layer of SVC
4 - an SVC/MVC bitstream subset of certain priority_id range
5 - a stream containing only particular subsamples of all samples
6 - a stream containing only samples within a particular degradation priority range
7 - a stream containing only a particular adaptation path

track_id indicates a track. tier_id indicates a tier within a track (of SVC or MVC). grouping_type indicates which Sample Group Description box and Sample to Group box are associated.

The least significant bit of grouping_flags should be set if the grouping_type_parameter specified in the draft amendment 1 for ISO Base Media File Format Edition 3 (MPEG document N9826). The grouping_type_parameter is additionally used to indicate which Group Description box and Sample to Group box is associated.

group_description_index indicates the index of those samples in the associated Sample to Group box(es) that form the track subset.

priority_layer indicates which priority_layer is used to form a track subset. When priority layer is referred, the track_id shall point to the timed metadata track for SVC that contains appropriate priority layer statements.

num_subsample_entries indicates the number of entries defining which subsamples are included in the track subset. min_subsample_priority and max_subsample_priority indicates the subsample priority range included in track subset.

discardable_required equal to 0 indicates that samples having the discardable field equal to 0 are not included in the track subset. discardable_required equal to 1 indicates that samples having the discardable field equal to 1 are not included in the track subset. discardable_required equal to 2 indicates that the discardable field is ignored when selecting the samples for the track subset.

mask_one_bit_required provides a mask for the reserved field of the Subsample Information box. When (mask_one_bit_required & reserved) == mask_one_bit_required (& is bit-wise and), the corresponding subsample is included in the track subset (provided that all the other criteria are also fulfilled).

mask_zero_bit_required provides a mask for the reserved field of the Subsample Information box. When (mask_zero_bit_required & reserved) == 0, the corresponding subsample is included in the track subset (provided that all the other criteria are also fulfilled).

When entry_type is 6, samples with degradation priority in the range of 0 to max_degradation_priority are included in the track subset. (This assumes that degradation priority 0 marks the most important data and importance drops when degradation priority increases.)

adaptation_path_id indicates which adaptation path provides the track subset.

The Multi-Track Group Box for Multiview Video is defined as follows:

```
 Box Type: 'mvcg'
 Container: Multi-Track Group Container box ('mtgc')
 Mandatory: No
 Quantity: Zero or more
```

This box specifies a multi-track group for the views of multi-view video stream that are output. Each track or track subset that is included in the box is intended to be output. If a track or a track subset contains multiple views, all the contained views are intended for output.

Decoding of the output views may require decoding of other views that are not intended for output. The views that are required for decoding but not intended for output may be concluded from the 'mvpr' track references and from the contents Tier Dependency box. The syntax and the semantics of the syntax elements in the Multi-Track Group Box for Multiview Video are as follows:

```
 aligned(8) class MultiviewVideoMultiTrackGroupBox () extends
 MultiTrackGroupBox('mvcg', version = 0, flags) {
   TierInfoBox subset_stream_info; // mandatory
   TierBitRateBox subset_stream_bit_rate; // optional
   BufferingBox subset_stream_buffering; // optional
   InitialParameterSetBox subset_stream_initial_parameter_sets; //
   optional
   MultiviewSceneInfoBox multiview_scene_info; // optional
 } 
```

It is noted that the presence of the Tier Information box, Tier Bit Rate box, and Buffering box must be allowed also in the Multi-Track Group Box for Multiview Video in addition to those allowed container boxes mentioned in the definition of Tier Information box, Tier Bit Rate box, and Buffering box presented earlier.

relation_attribute_box included in the Multi-Track Group box indicates the relations between output views. If 'ecam' is used as a common attribute, all the output views are associated with extrinsic camera parameters with identical rotation and constant in-line spacing. If 'ecam' is used as a differentiating attribute, one output view are associated with extrinsic camera parameters with different rotation from the others or the output views are associated with extrinsic camera parameters not having a constant in-line spacing.

subset_stream_info indicates the characteristics of the bitstream subset containing the indicated output views and the views they depend on.

subset_stream_bit_rate indicates the bit rate statistics of the bitstream subset containing the indicated output views and the views they depend on. The values of tierBaseBitRate, tierMaxBitRate, and tierAvgBitRate within the TierBitRateBox are unspecified.

subset_stream_buffering indicates the Hypothetical Reference Decoder (HRD) parameters that apply to the bitstream subset containing the indicated output views and the views they depend on.

subset_stream_initial_parameter_sets includes the parameter sets that are required for decoding of the bitstream subset containing the indicated output views and the views they depend on.

multiview_scene_info contains the maximum disparity in units of integer pixel resolution between any spatially adjacent output views in any access unit.

The Multi-Track Group Relation Box is defined as follows:

```
 Box Type: registered for each relation type
 Container: Multi-Track Group Container box ('mtgc')
 Mandatory: No
 Quantity: Zero or more
```

This abstract box provides a mechanism to indicate multi-track groups and their relations with each other. The box type of the derived boxes indicates the criteria for grouping the indicated multi-track groups together. The syntax and the semantics of the syntax elements in the Multi-Track Group Relation Box are as follows:

```
 aligned(8) class MultiTrackGroupRelationBox () extends
 FullBox(multi_track_group_relation_type, version = 0, flags) {
   unsigned int(32) num_entries;
   for (i=0; i<num_entries; i++)
       unsigned int(32) multi_track_group_id;
   RelationAttributesBox relation attributes;
 } 
```

num_entries indicates the number of associated multi-track groups. multi_track_group_id is the identifier of an associated multi-track group. relation_attributes indicate the relations between the associated multi-track groups.

The Switch Multi-Track Group Relation Box is defined as follows:

```
 Box Type: swtc
 Container: Multi-Track Group Container box ('mtgc')
 Mandatory: No
 Quantity: Zero or more
```

This box specifies a set of multi-track groups from which one multi-track group is decoded and played at any time. The given relation attributes specify which features are common in all associated multi-track groups and which factors make the multi-tracks groups differ from each other. The relation attributes may be used to select a suitable set of multi-track groups for playback, e.g., based on the number of output views in case of multiview video content. The differentiating attributes may be used to select which multi-track group within the set is suitable for the player, e.g., based on the required level for decoding.

The syntax for the Switch Multi-Track Group Relation Box are as follows:

```
 aligned(8) class MultiviewVideoMultiTrackGroupRelationBox () extends
 MultiTrackGroupRelationBox('swtc', version = 0, flags) {
 } 
```

The order of multi-track groups listed in the Switch Multi-Track Group Relation Box may indicate a preference order. For example, the first indicated multi-track group may be the preferred one for playback (as judged by the content creator).

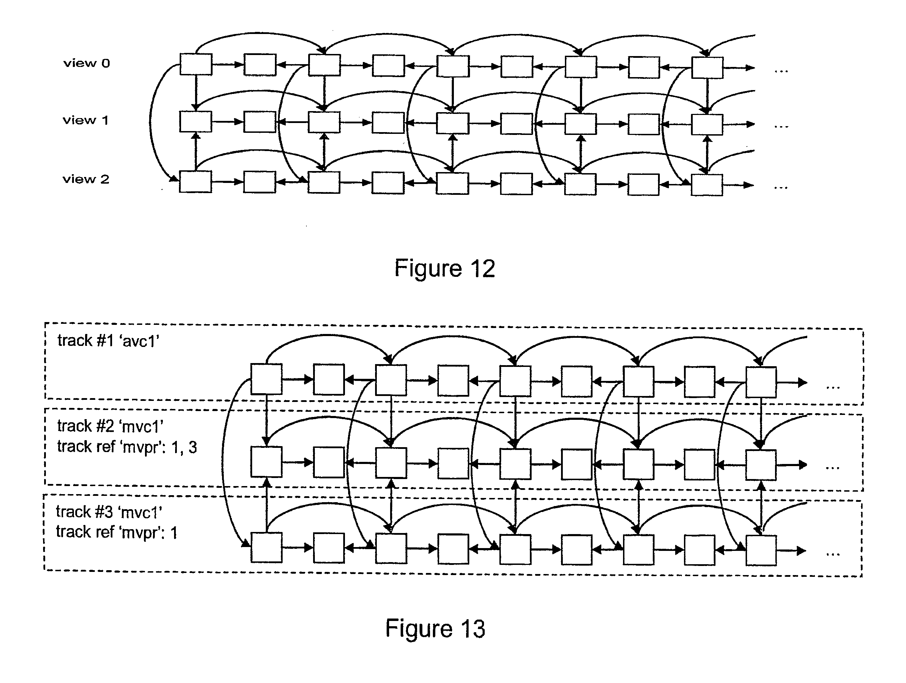

The use of the presented file format structures is described with reference to the example illustrated in Figure 12. The example bitstream contains three views. View 0 is the AVC-compatible base view. The reference pictures for inter prediction within view 2 are inter-view-predicted from view 0, and the reference pictures for inter prediction within view 1 are inter-view-predicted from views 0 and 1. Each view has two temporal levels, enabled by every other view component within each view being coded as a non-reference picture. The cameras used to acquire the views were placed in-line and the distance between two adjacent cameras remained unchanged in the capturing arrangement. The cameras pointed to the same direction (i.e., their rotation was identical), and they were of the same type (i.e., the intrinsic camera parameters were identical).

Figures 13-15 illustrate possible ways to store the example bitstream in a container file. In Figure 13, a track is formed for each view separately. The sample entry for the track storing the base view is 'avc1'. The other two tracks are marked with track reference of type 'mvpr', which indicates the tracks required for decoding the track containing the track reference.

The following piece of pseudo-code defines four multi-track groups. Multi-track group 1 consists of views 0 and 1 (tracks #1 and #2), multi-track group 2 consists of views 1 and 2 (tracks #2 and #3), multi-track group 3 consists of views 0 and 2 (tracks #1 and #3), and multi-track group 4 consists of all the views. The same common and differentiating attributes are defined for each multi-track group. Frame rate as well as intrinsic and extrinsic camera parameters are named as common parameters as they remain the same in all views. Codec changes from AVC ('avc1' sample entry) in track#1 to MVC ('mvc 1' sample entry) in the other tracks; hence it is mentioned as a differentiating attribute. It is also assumed in the example that the required level differs dependening on which views are decoded (which is very likely in most encoding arrangements).

The pseudo-code then specifies three multi-track group relation boxes of type "switch". The first relation box lists all the defined multi-track groups. Their common attributes are frame rate, intrinsic camera parameters, codec (as the set of sample entries in all cases consists of 'avc1' and 'mvc1'), and profile (as the set of profiles consists of the profile for the base view and the selected multiview profile). The differentiating parameters are number of output views (which ranges from 2 to 3 in this example), extrinsic camera parameters (as the distance between the cameras for the output views in multi-track group 3 differs from that of the other multi-track groups), and level. A player capable of displaying any multiview content may choose a multi-track group for playback based on this relation box.

The second relation box lists multi-track groups 1, 2, and 3. The common and differentiating parameters are the same as for the first relation box except that the number of output views is now a common attribute (the value of which is 2 in all the listed multi-track groups). A player capable of displaying any 2-view content (e.g., by using shutter glasses) may choose a multi-track group for playback based on this relation box. The third relation box lists multi-track groups 1 and 2. The common and differentiating parameters are the same as for the second relation box except that the extrinsic camera parameters are now a common attribute (because the spatial distance between the cameras for the output views is identical in the listed multi-track groups). A player requiring a definite mutual relation of the displayed views (e.g., for display on an autostereoscopic display) may choose a multi-track group for playback based on this relation box.

```
mtgc {
  mvcg {
     multi_track_group_id = 1;
     {
       entry_type[0] = 0;
       track_id[0] = 1;
       entry_type[1] = 0;
       track_id[1] = 2;
     }
     relation_attribute_box {
       common_attribute[0] = 'frar';
       common_attribute [1] = 'icam';
       common_attribute[2] - = 'ecam';
       differentiating_attribute[0] - 'cdec';
       differentiating_attribute[1] = 'levl';
     }
 }
 mvcg {
     multi_track_group_id = 2;
     {
       entry_type [0] = 0;
       track_id[0] = 2;
       entry_type[1] = 0;
       track_id[1] = 3;
     }
     relation_attribute_box {
       common_attribute[0] = 'frar';
       common_attribute[1] - 'icam';
        common_attribute [2] = 'cam';
        differentiating_attribute[0] = 'cdec';
       differentiating_attribute[1] = 'levl';
     }
 }
 mvcg {
     multi_rack_group_id = 3;
     {
        entry_type[0] = 0;
        track_id[0] = 1;
        entry_type[1] = 0;
        track_id[1] = 3;
     }
     relation_attribute_box {
       common_attribute[0] = 'frar';
       common_attribute[1] = 'icam';
       common_attribute[2] = 'ecam';
       differentiating_attribute[0] = 'cdec';
       differentiating_attribute[1] = 'levl';
    }
 mvcg {
    multi_track_group_id = 4;
     {
       entry_type[0] = 0;
       track_id[0] = 1;
       entry_type [1] = 0;
       track_id [1] = 2;
       entry_type[2] = 0;
       track_id[2] = 3;
     }
    relation_attribute_box {
       common_attribute[0] = 'frar';
       common_attribute [1] = 'icam';
       common_attribute[2] = 'ecam';
       differentiating_attribute[0] = 'cdec';
       differentiating_attribute[1] = 'levl';
     }
 }
 swtc { // #1
     {
       multi_track__group_id[0] = 1;
       multi_track_group_id[1] = 2;
       multi_track_group_id[2] = 3;
       multi_track_group_id[3] = 4;
     }
    relation_attributes {
       common_attribute[0] = = 'frar';
       common_attribute [1] = 'icam';
       common_attribute[2] = 'cdec';
       common_attribute[3] = 'prfl';
       differentiating_attribute[0] = 'nvws';
       differentiating_attribute [1] = 'ecam';
       differentiating_attribute[2] = 'levl';
     }
 }
 swtc { // #2
     {
       multi_track_group_id[0] = 1;
       multi_track_group_id[1] =2;
       multi_track_group_id[2] = 3;
     }
     relation_attributes {
       common_attribute [0] = 'frar';
       common_attribute [1] = 'icam';
       common_attribute[2] = 'cdec';
       common_attribute [3] = 'prfl';
       common_attribute[4] = 'nvws';
       differentiating_attribute[0] = 'ecam';
       differentiating_attribute[1] = 'levl';
     }
 }
 swtc { // #3
     {
       multi_track_group_id[0] = 1;
       multi_track_group_id[1] = 2;
     }
     relation_attributes {
       common_attribute[0] = 'frar';
       common_attribute[1] = = 'icam';
       common_attribute[2] = 'cdec';
       common_attribute [3] = 'prfl';
       common_attribute[4] = 'nvws';
       common_attribute[5] = 'ecam';
       differentiating_attribute[0] = 'levl';
     }
  }
 } 
```

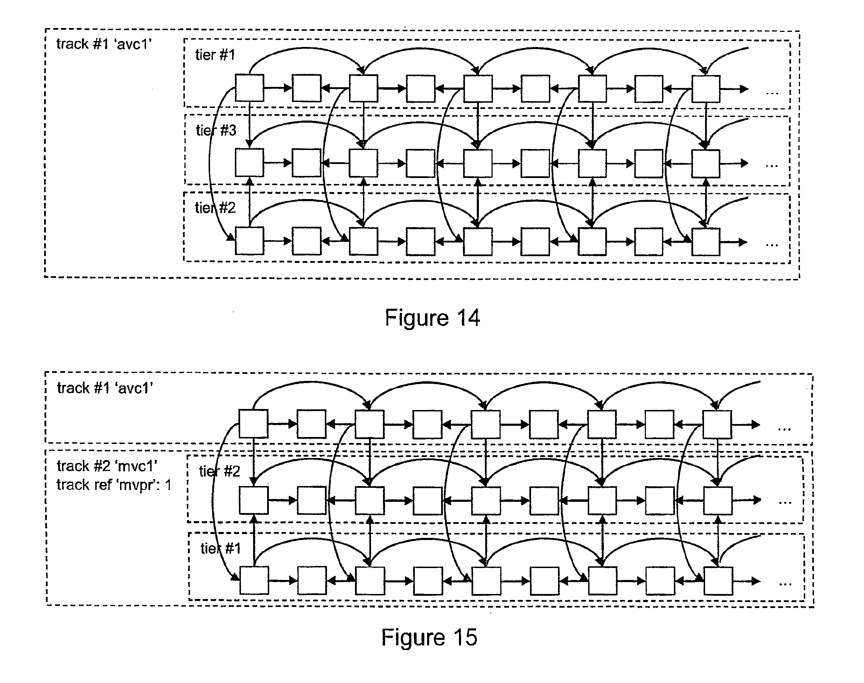

Figure 14 presents a file where a track encloses all views. The sample entry for the track storing the base view is 'avc1', because an AVC file reader may parse and decode the track. The sample entry contains an MVC Decoder Configuration Record. Three tiers are specified for the track using the sample group mechanism, each tier enclosing one view. The following pseudo-code is semantically identical compared to the pseudo-code for Figure 13. '===' indicates that the content of the structure remains unchanged relative to the pseudo-code for Figure 13. It can be seen that the structures did not change beyond the indication of the elements for a multi-track group, where a different mechanism is required to indicate a tier within a track compared to indicating an entire track as in the example for Figure 13.

```
 mtgc {
  mvcg {
     multi_track_group_id = 1;
     {
       entry_type[0] = 1;
       track_id[0] = 1;
       tier_id[0] = 1;
       entry_type [1] = 1;
       track_id[1] = 1;
       tier_id[1] = 3;
     }
     relation_attribute_box {
       ===
     }
  }
  mvcg {
     multi_track_group_id = 2;
     {
       entry_type[0] = 1;
       track_id[0] = 1;
       tier_id[0] = 3;
       entry_type [1] = 1;
       track_id[1] = 1;
        tier_id[1] = 2;
     }
     relation_attribute_box {
       ===
     }
   }
  mvcg {
     multi_track_group_id = 3;
     {
        entry_type [0] = 1;
        track_id[0] = 1;
        tier_id[0] = 1;
        entry_type [1] = 1;
        track_id[1] = 1;
        tier_id[1] = 2;
     }
     relation_attribute_box {
     ===
     }
  }
  mvcg {
     multi_track_group_id = 4;
     {
       entry_type[0] = 1;
       track_id[0] = 1;
       tier_id[0] = 1;
       entry_type[1] = 1;
       track_id[1] = 1;
       tier_id[1] = 3;
       entry_type[2] = 1;
       track_id[2] = 1;
       tier_id[2] = 2;
     }
     relation_attribute_box {
      ===
     }
  }
  swtc { // #1
     ===
   }
  swtc { // #2
     ===
   }
  swtc { // #3
     ===
  }
 }
```

It is noted that the presented mechanism is flexible enough for addressing tracks containing a different number of views. In Figure 15, the example bitstream is stored in such a manner that the base view forms a track and the other views form another track.

Two tiers are specified for the second track using the sample group mechanism, each tier enclosing one view.

The following pseudo-code is semantically identical compared to the pseudo-code sections for Figures 13 and 14.

```
 mtgc {
  mvcg {
     multi_track_group_id = 1;
     {
       entry_type[0] = 0;
       track_id[0] = 1;
       entry_type [1] = 1;
       track_id[1] = 2;
        tier_id[1] = 2;
     }
     relation_attribute_box {
       ===
     }
  }
  mvcg {
     multi_track_group_id = 2;
     {
        entry_type[0] = 1;
        track_id[0] = 2 ;
        tier_id[0] = 2;
        entry_type[1] = 1;
        track_id[1] = 2;
        tier_id[1] = 1;
     }
     relation_attribute_box {
        common_attribute[0] = 'frar';
        common_attribute[1] = 'icam';
        common_attribute[2] = 'ecam';
        common_attribute[3] = 'cdec';
        differentiating_attribute[1] = 'levl';
     }
  }
  mvcg {
     multi_track_group_id = 3;
     {
        entry_type[0] = 0;
        track_id[0] = 1;
        entry_type [1] = 1;
        track_id[1] = 2;
        tier_id[1] = 1;
     }
     relation_attribute_box {
       ===
     }
  }
  mvcg {
     multi_track_group_id = 4;
     {
        entry_type[0] = 0;
        track_id[0] = 1;
        entry_type [1] = 1;
       track_id[1] = 2;
       tier_id[1] = 2;
       entry_type[2] = 1;
       track_id[2] = 2;
       tier_id[2] = 1;
     }
     relation_attribute_box {
       ===
     }
  }
  swtc { // #1
    ===
  }
  swtc { // #2
    ===
  }
  swtc { // #3
    ===
  }
 }
```

Another example implementation of embodiments of the present invention is described below in terms of syntax and semantics relative to the ISO Base Media File Format.

The Multiview Group Container box is defined as follows.

```
 Box Type: 'mvgc'
 Container: Movie Box ('moov')
 Mandatory: No
 Quantity: Zero or one
```

This box contains Multiview Group boxes and Multiview Group Relation boxes.

The syntax of the Multiview Group Container box is specified as follows.

```
 aligned(8) class MultiviewGroupContainerBox
   extends FullBox('mvgc', version = 0, flags) {
   } 
```

The Multiview Group box is defined as follows.

```
 Box Type: 'mvcg'
 Container: Multiview Group Container box ('mvgc')
 Mandatory: No
 Quantity: One or more
```

This box specifies a multiview group for the views of the multiview video stream that are output. Each view in a track or tier that is included in this box is intended to be output. If a track or a tier included in this box contains multiple views, all the contained views are intended for output. Decoding of the output views may require decoding of other views that are not intended for output. The views that are required for decoding but not intended for output may be concluded from the 'mvpr' track references or from the Tier Dependency box.

The syntax of the Multiview Group box is specified as follows.

```
 aligned(8) class MultiviewGroupBox extends FullBox('mvcg', version = 0,
 flags) {
   unsigned int(32) multiview_group_id;
   unsigned int(16) num_entries;
    for(i=0; i<num_entries; i++) {
       unsigned int(8) entry_type;
       if (entry_type == 0)
           unsigned int(32) track_id;
       else if (entry_type == 1) {
           unsigned int(32) track_id;
           unsigned int(16) tier_id;
        }
    }
   TierInfoBox subset_stream_info; // mandatory
   MultiviewRelationAttributeBox relation_attributes; // optional
   TierBitRateBox subset_stream_bit_rate; // optional
   BufferingBox subset_stream_buffering; // optional
   MultiviewSceneInfoBox multiview_scene_info; // optional
 } 
```

It is noted that the presence of the Tier Information box, Tier Bit Rate box, and Buffering box must be allowed also in the Multiview Group box in addition to those allowed container boxes mentioned in the definition of Tier Information box, Tier Bit Rate box, and Buffering box presented earlier.

The semantics of the Multiview Group box are specified as follows. multiview_group_id provides a unique identifier for the multiview group within the file. num_entries is the number of tracks and tiers included in this multiview group.

entry_type indicates which type of a track or tier follows. The following values of entry_type are specified: 0 - an entire track, 1 - a tier within a track.

track_id indicates a track.

tier_id indicates a tier within a track.

subset_stream_info indicates the characteristics of the bitstream subset containing the indicated output views and the views they depend on.

relation_attributes indicate the relations between output views. If 'ecam' is used as a common attribute, all the output views are associated with extrinsic camera parameters indicating that the cameras have identical rotation and constant spacing and are in-line, i.e., in parallel with each other. If 'ecam' is used as a differentiating attribute, one output view are associated with extrinsic camera parameters with different rotation from the others or the output views are associated with extrinsic camera parameters not having a constant in-line spacing.

subset_stream_bit_rate indicates the bit rate statistics of the bitstream subset containing the indicated output views and the views they depend on. The values of tierBaseBitRate, tierMaxBitRate, and tierAvgBitRate within the TierBitRateBox are unspecified. subset_stream_buffering indicates the HRD parameters that apply to the bitstream subset containing the indicated output views and the views they depend on.

multiview_scene_info contains the maximum disparity in units of integer pixel resolution between any spatially adjacent output views in any access unit.

The Multiview Group box may be extended by additionally including other boxes.

The Multiview Group Relation box is defined as follows.

```
 Box Type: swtc
 Container: Multiview Group Container box ('mvgc')
 Mandatory: No
 Quantity: Zero or more
```

This box specifies a set of multiview groups from which one multiview group is decoded and played at any time. The given relation attributes specify which features are common in all associated multiview groups and which factors make the multiviews groups differ from each other. The relation attributes may be used to select a suitable set of multiview groups for playback, e.g., based on the number of output views. The differentiating attributes may be used to select which multiview group within the set is suitable for the player, e.g., based on the required level for decoding.

The syntax of the Multiview Group Relation box is specified as follows.

```
 aligned(8) class MultiviewGroupRelationBox () extends FullBox(, version
 = 0, flags) {
   unsigned int(32) num_entries;
   for (i=0; i<num_entries; i++)
       unsigned int(32) multiview_group_id;
   MultiviewRelationAttributeBox relation attributes;
 } 
```

The semantics of the Multiview Group Relation box are specified as follows. num_entries indicates the number of associated multiview groups. multiview_group_id is the identifier of an associated multiview group. relation_attributes indicate the relations between the associated multiview groups.

The Multiview Relation Attribute box is defined as follows.

```
 Box Type: 'mvra'
 Container: MultiviewGroupBox or MultiviewGroupRelationBox
 Mandatory: No
 Quantity: Zero or one
```

When the Multiview Relation Attribute box is contained in a Multiview Group box, it indicates the relation of the tracks or tiers of the respective multiview group with each other. When the Multiview Relation Attribute box is contained in a Multiview Group Relation box, it indicates the relation of the multiview groups with each other.

The syntax of the Multiview Relation Attribute box is specified as follows.

```
 aligned(8) class MultiviewRelationAttributeBox
   extends FullBox('mvra', version = 0, flags) {
   unsigned int(16) reserved;
   unsigned int(16) num_common_attributes;
   for (i=0; i<num_common_attributes; i++)
       unsigned int(32) common_attribute;
   unsigned int(16) reserved;
   unsigned int(16) num_differentiating_attributes;
   for (i=0; i<num_differentiating_attributes; i++)
       unsigned int(32) diffentiating attribute;
 } 
```

For the semantics of the Multiview Relation Attribute box, a unit is specified as a track or a tier when the Multiview Relation Attribute box is contained in a Multiview Group box and as a group of output views when the Multiview Relation Attribute box is contained in a Multiview Group Relation box. common_attribute and differentiating_attribute are selected from the list below. Attributes that may be used as a differentiating attribute are associated with a distinguishing pointer to the field or information.

| *Name* | *Attribute* | *Pointer* |
|---|---|---|
| Profile | 'prfl' | Decoder configuration record |
| Level | 'levl' | Decoder configuration record |
| Bitrate | 'bitr' | Total size of the samples in the track divided by the duration in the track header box |
| Frame rate | 'frar' | Number of samples in the track divided by duration in the track header box |
| Number of output views | 'nvws' | Number of entries in the Multiview Group Box ('mvcg') |
| Intrinsic camera parameters | 'icam' | 'avc1', 'avc2', or 'mvc 1' S ample Entry (in S ample Description box of media track). If used as a common attribute, the intrinsic camera parameters of respective views between associated units are identical. If used as a differentiating attribute, the intrinsic camera parameters of respective views between associated units differ at least partly. |
| Extrinsic camera parameters | 'ecam' | 'avc1', 'avc2', or 'mvc1' Sample Entry (in Sample Description box of media track). If used as a common attribute, the relative extrinsic camera parameters of respective views between associated units are identical. That is, the distance of cameras and their rotation relative to each other matches in the associated units. If used as a differentiating attribute, the relative extrinsic camera parameters of respective views between associated units differ at least partly. |

All units share the same common attributes or the common attributes jointly characterize all units. A differentiating attribute indicates that at least one unit differs from the others based on this attribute. The pointer of a differentiating attribute indicates the location of the information that differentiates one unit from other units with the same attribute.

The following pseudo-code defines four multiview groups equivalently to the pseudo-code for the previous example (some fields like num_entries, num_common_attributes, and num_differentiating_attributes are not included). Multiview group 1 consists of views 0 and 1 (tracks #1 and #2), multiview group 2 consists of views 1 and 2 (tracks #2 and #3), multiview group 3 consists of views 0 and 2 (tracks #1 and #3), and multiview group 4 consists of all the views. The same common and differentiating attributes are defined for each multiview group. Frame rate as well as intrinsic and extrinsic camera parameters are named as common parameters as they remain the same in all views. It is also assumed in the example that the required level differs dependening on which views are decoded (which is very likely in most encoding arrangements).

The pseudo-code then specifies three multiview group relation boxes (again some fields like num_entries, num_common_attributes, and num_differentiating_attributes are not included). The first relation box lists all the defined multiview groups. Their common attributes are frame rate, intrinsic camera parameters, and profile (as the set of profiles consists of the profile for the base view and the selected multiview profile). The differentiating parameters are number of output views (which ranges from 2 to 3 in this example), extrinsic camera parameters (as the distance between the cameras for the output views in multiview group 3 differs from that of the other multiview groups), and level. A player capable of displaying any multiview content may choose a multiview group for playback based on this relation box.

The second relation box lists multiview groups 1, 2, and 3. The common and differentiating parameters are the same as for the first relation box except that the number of output views is now a common attribute (the value of which is 2 in all the listed multiview groups). A player capable of displaying any 2-view content (e.g., by using shutter glasses) may choose a multiview group for playback based on this relation box. The third relation box lists multiview groups 1 and 2. The common and differentiating parameters are the same as for the second relation box except that the extrinsic camera parameters are now a common attribute (because the spatial distance between the cameras for the output views is identical in the listed multiview groups). A player requiring a definite mutual relation of the displayed views (e.g., for display on an autostereoscopic display) may choose a multiview group for playback based on this relation box.

```
 mvgc {
  mvcg {
    multiview_group_id = 1;
    {
       entry_type[0] = 0;
       track_id[0] = 1;
       entry_type [1] = 0;
       track_id[1] = 2;
    }
    relation_attribute__box {
       common_attribute [0] = 'frar';
       common_attribute [1] = 'icam';
       common_attribute[2] = 'ecam';
       differentiating_attribute[0] = 'levl';
     }
  }
  mvcg {
    multiview_group_id = 2;
     {
       entry_type[0] = 0;
       track_id[0] = 2;
       entry_type [1] = 0;
       track_id[1] = 3;
    }
    relation_attribute_box {
       common_attribute[0] = 'frar';
       common_attribute [1] = 'icam';
       common_attribute[2] = 'ecam';
       differentiating_attribute[0] = 'levl';
    }
  }
  mvcg {
    multiview_group_id = 3;
    {
       entry_type[0] = 0;
       track_id[0] = 1;
       entry_type [1] = 0;
       track_id[1] = 3;
    }
    relation_attribute_box {
       common_attribute[0] = 'frar';
       common_attribute [1] = 'icam';
       common_attribute [2] = 'ecam';
       differentiating_attribute[0] = 'levl';
    }
  }
  mvcg {
    multiview_group_id = 4;
     {
       entry_type[0] = 0;
       track_id[0] = 1;
       entry_type [1] = 0;
       track_id[1] = 2;
       entry_type[2] = 0;
       track_id[2] = 3;
     }
    relation_attribute_box {
       common_attribute[0] = 'frar';
       common_attribute[1] = 'icam';
       common_attribute[2] = 'ecam';
       differentiating_attribute[0] = 'levl';
     }
  swtc { // #1
     {
       multiview_group_id[0] = 1;
       multiview_group_id[1] = 2;
       multiview_group_id[2] = 3;
       multiview_group_id[3] = 4;
     }
    relation_attributes {
       common_attribute[0] = 'frar';
       common_attribute[1] = 'icam';
       common_attribute[2] = 'prfl';
       differentiating_attribute[0] = 'nvws';
       differentiating_attribute[1] = 'ecam';
       differentiating_attribute[2] = 'levl';
     }
  }
  swtc { // #2
     {
       multiview_group_id[0] = 1;
       multiview_group_id[1] = 2;
       multiview_group_id[2] = 3;
     }
     relation_attributes {
       common_attribute[0] = 'frar';
       common_attribute[1] = 'icam';
       common_attribute[2] = 'prfl';
       common_attribute[3] = 'nvws';
       differentiating_attribute[0] = 'ecam';
       differentiating attribute[1] = 'levl';
     }
  }
  swtc { // #3
     {
       multiview_group_id[0] = 1;
       multiview_group_id[1] = 2;
     }
    relation_attributes {
       common_attribute[0] = 'frar';
       common_attribute[1] = 'icam';
       common_attribute[2] = 'prfl';
       common_attribute[3] = 'nvws';
       common_attribute[4] = 'ecam';
       differentiating_attribute[0] = 'levl';
     }
  }
 } 
```

Another example implementation of embodiments of the present invention is described below in terms of syntax and semantics relative to the ISO Base Media File Format. Particularly, the grouping_type_parameter feature of the upcoming Amendment 1 of the Edition 3 of the ISO Base Media File Format is used. The grouping type_parameter is included in the Sample to Group box and Sample Group Description box when their version number is higher than specified earlier. When the grouping_type_parameter is present, multiple instances of the Sample to Group box and Sample Group Description box are allowed with the same value of grouping_type in the same container box. Each instance is identified by the grouping_type_parameter. In the present embodiment, the grouping_type_parameter for 'mvif sample grouping is used to indicate a different set of output views compared to 'mvif sample groupings of a different value of grouping_type_parameter. grouping_type_parameter is equivalent to the multiview_group_id of the previous example. The Multiview Group Entry is modified such a way that it may be indicated which groupID values or tierID values are not intended for output or required for decoding. The Sample Group Description box of type 'mvif' may also contain the joint and differentiating characteristics and relations of indicated views using the Multiview Relation Attribute box, for example. Otherwise, either one of the previous examples may be used together with this example to indicate the characteristics of and relations between multi-track groups.

In various embodiments of the invention an indication of a multi-track group is used for associating two file format structures with each other. Conventionally, track references (or an index to the list included in a particular track reference box) have been used for associating structures with each other. For example, an extractor of the SVC file format uses an index into the track reference box of type 'scal' to identify the track from which to include data by reference into the current track. Similarly, there are constructors for the RTP hint track samples that include data by reference from media tracks using the track identifiers of those media tracks.

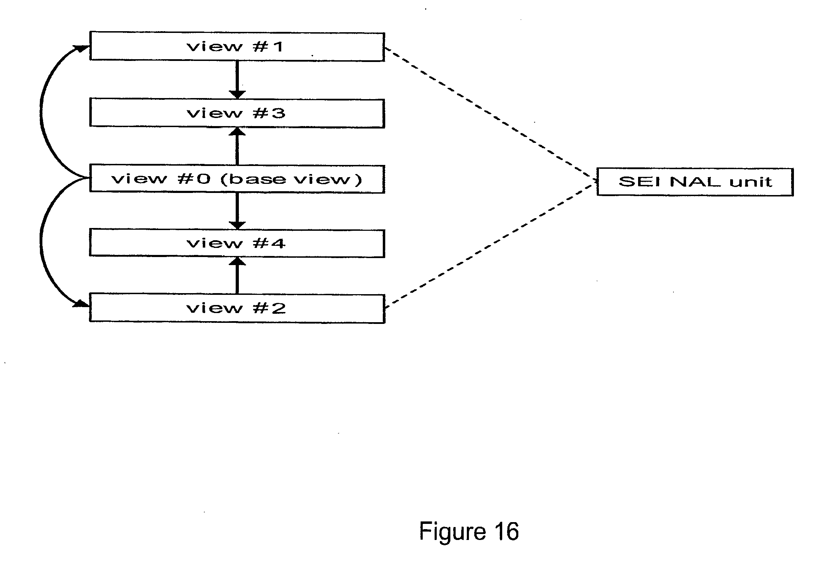

One embodiment is described using an example of referencing through multi-track groups illustrated in Figure 16. The figure presents a multiview bitstream and its inter-view prediction hierarchy. Views 1 and 2 are predicted from the base view, whereas view 3 is predicted from views 0 and 1 and view 4 is predicted from views 0 and 2. There is an SEI message associated with both view 1 and 2, e.g., by means of including the SEI message in the MVC scalable nesting SEI message.

When the bitstream presented in Figure 16 is stored in a file in such a manner that views 1 and 2 are stored in separate tracks, a question arises where the SEI NAL unit is stored. There are several options for the storage of the SEI NAL unit, including at least the following.

The SEI NAL unit may be duplicated and included in each track where it applies. This leads to file size increase. Moreover, when both view 1 and 2 are included in a bitstream that is decoded, it may be undetermined how the decoder handles duplicates of SEI messages. Furthermore, the encoder has created a bitstream including only one copy of the SEI message and the buffering compliancy of the bitstream has been tuned and signaled accordingly. Duplicates of the SEI message may cause the buffering compliancy of the stream created by a file parser to fail.

The SEI NAL unit may be included in a parameter set track. The tracks for view 1 and 2 may explicitly include (by reference) the SEI NAL unit by including an extractor (or similar) in the appropriate samples of the tracks for view 1 and 2.

The SEI NAL unit may be included in a parameter set track. The sample format for the parameter set track may include a list of multi-track group identifiers for which the SEI NAL unit applies. Alternatively, the sample format for the parameter set track may include a list of view identifiers for which the SEI NAL unit applies. When the file is played, the parser chooses an appropriate multi-track group for decoding. If the SEI NAL unit is indicated to be valid for that multi-track group, it included in the access unit that is reconstructed for the decoder.

Another embodiment in which an indication of a multi-track group is used for associating two file format structures is presented. The decoding time of a sample is equivalent to the the HRD coded picture buffer (CPB) removal time of H.264/AVC, SVC, and MVC. The CPB removal time for a particular access unit depends on the NAL units present for that access unit and previous access units. Consequently, if a bitstream subset is derived, the CPB removal times of the original bitstream are not likely to be correct any longer. Thus, a different set of CPB removal times, and respectively decoding times for samples, should be provided for each bitstream subset. As the association of MVC samples in different tracks to the same access unit is done through the decoding time of the samples, it is beneficial to set the decoding time of all samples of the same access unit to an identical value, which may not correspond to the CPB removal time of any bitstream subset (and may be equal to the CPB removal time applicable to the entire bitstream). A Multiview Decode Retiming box may be specified to include a multiview group identifier and a delta time value for each sample, which, when added to the decode time of the sample, provides the CPB removal time for the respective access unit, applicable to the bitstream subset specified by the multiview group. Alternatively, a Multiview Decode Retiming sample grouping may be specified similarly to the decode re-timing groups of the SVC file format, but linked to a particular multiview group through its identifier.

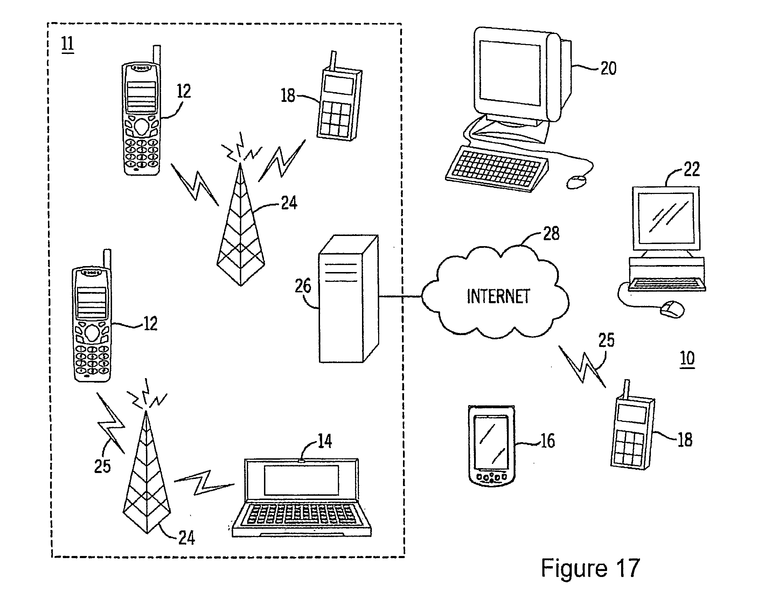

Figure 17 shows a system 10 in which various embodiments of the present invention may be utilized, comprising multiple communication devices that may communicate through one or more networks. The system 10 may comprise any combination of wired or wireless networks including, but not limited to, a mobile telephone network, a wireless Local Area Network (LAN), a Bluetooth personal area network, an Ethernet LAN, a token ring LAN, a wide area network, the Internet, etc. The system 10 may include both wired and wireless communication devices.

For exemplification, the system 10 shown in Figure 17 includes a mobile telephone network 11 and the Internet 28. Connectivity to the Internet 28 may include, but is not limited to, long range wireless connections, short range wireless connections, and various wired connections including, but not limited to, telephone lines, cable lines, power lines, and the like.

The example communication devices of the system 10 may include, but are not limited to, an electronic device 12 in the form of a mobile telephone, a combination personal digital assistant (PDA) and mobile telephone 14, a PDA 16, an integrated messaging device (IMD) 18, a desktop computer 20, a notebook computer 22, etc. The communication devices may be stationary or mobile as when carried by an individual who is moving. The communication devices may also be located in a mode of transportation including, but not limited to, an automobile, a truck, a taxi, a bus, a train, a boat, an airplane, a bicycle, a motorcycle, etc. Some or all of the communication devices may send and receive calls and messages and communicate with service providers through a wireless connection 25 to a base station 24. The base station 24 may be connected to a network server 26 that allows communication between the mobile telephone network 11 and the Internet 28. The system 10 may include additional communication devices and communication devices of different types.

The communication devices may communicate using various transmission technologies including, but not limited to, Code Division Multiple Access (CDMA), Global System for Mobile Communications (GSM), Universal Mobile Telecommunications System (UMTS), Time Division Multiple Access (TDMA), Frequency Division Multiple Access (FDMA), Transmission Control Protocol/Internet Protocol (TCP/IP), Short Messaging Service (SMS), Multimedia Messaging Service (MMS), e-mail, Instant Messaging Service (IMS), Bluetooth, IEEE 802.11, etc. A communication device involved in implementing various embodiments of the present invention may communicate using various media including, but not limited to, radio, infrared, laser, cable connection, and the like.

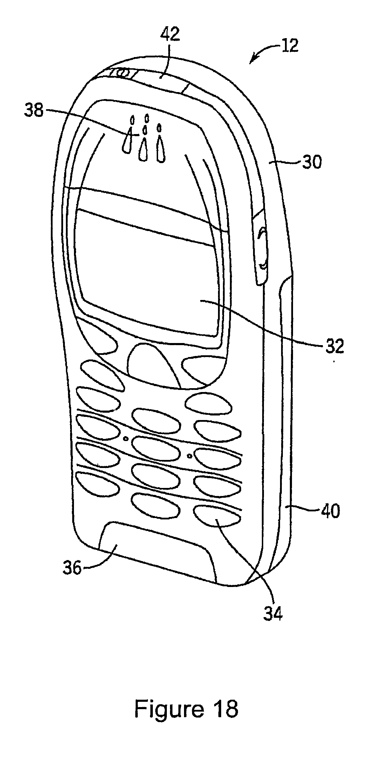

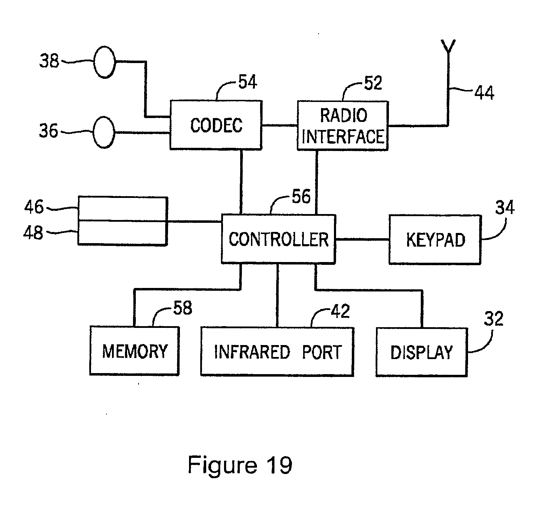

Figures 18 and 19 show one representative electronic device 28 which may be used as a network node in accordance to the various embodiments of the present invention. It should be understood, however, that the scope of the present invention is not intended to be limited to one particular type of device. The electronic device 28 of Figures 18 and 19 includes a housing 30, a display 32 in the form of a liquid crystal display, a keypad 34, a microphone 36, an ear-piece 38, a battery 40, an infrared port 42, an antenna 44, a smart card 46 in the form of a UICC according to one embodiment, a card reader 48, radio interface circuitry 52, codec circuitry 54, a controller 56 and a memory 58. The above described components enable the electronic device 28 to send/receive various messages to/from other devices that may reside on a network in accordance with the various embodiments of the present invention. Individual circuits and elements are all of a type well known in the art, for example in the Nokia range of mobile telephones.

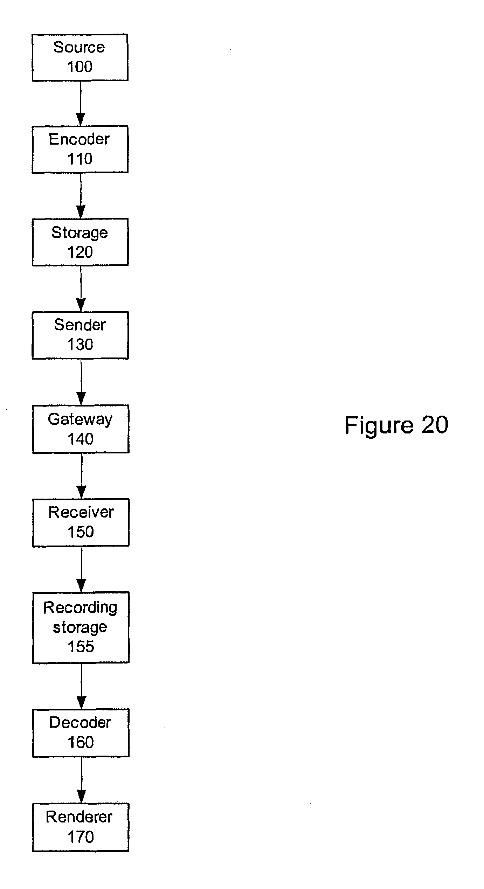

Figure 20 is a graphical representation of a generic multimedia communication system within which various embodiments of the present invention may be implemented. As shown in Figure 20, a data source 100 provides a source signal in an analog, uncompressed digital, or compressed digital format, or any combination of these formats. An encoder 110 encodes the source signal into a coded media bitstream. It should be noted that a bitstream to be decoded may be received directly or indirectly from a remote device located within virtually any type of network. Additionally, the bitstream may be received from local hardware or software. The encoder 110 may be capable of encoding more than one media type, such as audio and video, or more than one encoder 110 may be required to code different media types of the source signal. The encoder 110 may also get synthetically produced input, such as graphics and text, or it may be capable of producing coded bitstreams of synthetic media. In the following, only processing of one coded media bitstream of one media type is considered to simplify the description. It should be noted, however, that typically real-time broadcast services comprise several streams (typically at least one audio, video and text sub-titling stream). It should also be noted that the system may include many encoders, but in Figure 20 only one encoder 110 is represented to simplify the description without a lack of generality. It should be further understood that, although text and examples contained herein may specifically describe an encoding process, one skilled in the art would understand that the same concepts and principles also apply to the corresponding decoding process and vice versa.

The coded media bitstream is transferred to a storage 120. The storage 120 may comprise any type of mass memory to store the coded media bitstream. The format of the coded media bitstream in the storage 120 may be an elementary self-contained bitstream format, or one or more coded media bitstreams may be encapsulated into a container file. If one or more media bitstreams are encapsulated in a container file, a file generator (not shown in the figure) is used to store the one more more media bitstreams in the file and create file format metadata, which is also stored in the file. The encoder 110 or the storage 120 may comprise the file generator, or the file generator is operationally attached to either the encoder 110 or the storage 120. Some systems operate "live", i.e. omit storage and transfer coded media bitstream from the encoder 110 directly to the sender 130. The coded media bitstream is then transferred to the sender 130, also referred to as the server, on a need basis. The format used in the transmission may be an elementary self-contained bitstream format, a packet stream format, or one or more coded media bitstreams may be encapsulated into a container file. The encoder 110, the storage 120, and the server 130 may reside in the same physical device or they may be included in separate devices. The encoder 110 and server 130 may operate with live real-time content, in which case the coded media bitstream is typically not stored permanently, but rather buffered for small periods of time in the content encoder 110 and/or in the server 130 to smooth out variations in processing delay, transfer delay, and coded media bitrate. The server 130 sends the coded media bitstream using a communication protocol stack. The stack may include but is not limited to Real-Time Transport Protocol (RTP), User Datagram Protocol (UDP), and Internet Protocol (IP). When the communication protocol stack is packet-oriented, the server 130 encapsulates the coded media bitstream into packets. For example, when RTP is used, the server 130 encapsulates the coded media bitstream into RTP packets according to an RTP payload format. Typically, each media type has a dedicated RTP payload format. It should be again noted that a system may contain more than one server 130, but for the sake of simplicity, the following description only considers one server 130.

If the media content is encapsulated in a container file for the storage 120 or for inputting the data to the sender 130, the sender 130 may comprise or be operationally attached to a "sending file parser" (not shown in the figure). In particular, if the container file is not transmitted as such but at least one of the contained coded media bitstream is encapsulated for transport over a communication protocol, a sending file parser locates appropriate parts of the coded media bitstream to be conveyed over the communication protocol. The sending file parser may also help in creating the correct format for the communication protocol, such as packet headers and payloads. The multimedia container file may contain encapsulation instructions, such as hint tracks in the ISO Base Media File Format, for encapsulation of the at least one of the contained media bitstream on the communication protocol

The server 130 may or may not be connected to a gateway 140 through a communication network. The gateway 140 may perform different types of functions, such as translation of a packet stream according to one communication protocol stack to another communication protocol stack, merging and forking of data streams, and manipulation of data stream according to the downlink and/or receiver capabilities, such as controlling the bit rate of the forwarded stream according to prevailing downlink network conditions. Examples of gateways 140 include multipoint conference control units (MCUs), gateways between circuit-switched and packet-switched video telephony, Push-to-talk over Cellular (PoC) servers, IP encapsulators in digital video broadcasting-handheld (DVB-H) systems, or set-top boxes that forward broadcast transmissions locally to home wireless networks. When RTP is used, the gateway 140 is called an RTP mixer or an RTP translator and typically acts as an endpoint of an RTP connection.

The system includes one or more receivers 150, typically capable of receiving, demodulating, and de-capsulating the transmitted signal into a coded media bitstream. The coded media bitstream is transferred to a recording storage 155. The recording storage 155 may comprise any type of mass memory to store the coded media bitstream. The recording storage 155 may alternatively or additively comprise computation memory, such as random access memory. The format of the coded media bitstream in the recording storage 155 may be an elementary self-contained bitstream format, or one or more coded media bitstreams may be encapsulated into a container file. If there are many coded media bitstreams, such as an audio stream and a video stream, associated with each other, a container file is typically used and the receiver 150 comprises or is attached to a receiving file generator (not shown in the figure) producing a container file from input streams. Some systems operate "live," i.e. omit the recording storage 155 and transfer coded media bitstream from the receiver 150 directly to the decoder 160. In some systems, only the most recent part of the recorded stream, e.g., the most recent 10-minute excerption of the recorded stream, is maintained in the recording storage 155, while any earlier recorded data is discarded from the recording storage 155.

The coded media bitstream is transferred from the recording storage 155 to the decoder 160. If there are many coded media bitstreams, such as an audio stream and a video stream, associated with each other and encapsulated into a container file or a single media bitstream is encapsulated in a container file e.g. for easier access, a file parser (not shown in the figure) is used to decapsulate each coded media bitstream from the container file. The recording storage 155 or a decoder 160 may comprise the file parser, or the file parser is attached to either recording storage 155 or the decoder 160.

The codec media bitstream is typically processed further by a decoder 160, whose output is one or more uncompressed media streams. Finally, a renderer 170 may reproduce the uncompressed media streams with a loudspeaker or a display, for example. The receiver 150, recording storage 155, decoder 160, and renderer 170 may reside in the same physical device or they may be included in separate devices.

A file generator according to various embodiments identifies multi-track groups from the coded media bitstreams or receives an identification of multi-track groups from the encoder 110. The file generator may form multi-track groups on different basis, such as intended output views of a multiview video bitstream. The file generator includes information which parts of the coded media bitstreams are included in a particular multi-track group in the file. One example of the format for the information is the Multi-Track Group box. The file generator may also indicate the relations between multi-track groups in the file, e.g., by using the Multi-Track Group Relation box. A receiving file generator according to various embodiments operates similarly to the file generator, but the coded media bitstreams are received from the receiver 150.

A sending file parser according to various embodiments may read the multi-track group characteristics and relations in order to determine which parts of the file are encapsulated for transmission. Furthermore, multi-track group information may have been created in the file generator for encapsulation information for transmission over a communication protocol. Such encapsulation information may be, for example, intstructions (such as hint tracks) to form packets for transmitting a multiview video stream over multiple transmission sessions, where each session carries one or more views of the multiview video stream.

A sender 130 according to various embodiments may be configured to select the transmitted views for multiple reasons, such as to respond to requests of the receiver 150 or prevailing conditions of the network over which the bitstream is conveyed. A request from the receiver may be, e.g., a request for a change of views for display or a change of a rendering device having different capabilities compared to the previous one. A sender 130 configured to select the transmitted views may use or be operationally connected to a sending file parser when selecting the transmitted views.

A file parser according to various embodiments identifies multi-track groups from the file based on the respective indications included in the file. The file parser reads the information about the characteristics of the multi-track groups and their relations (common and differentiating attributes) between each other. Based on the characteristics and relations, the file parser chooses a multi-track group for processing. The file parser may e.g. choose such a multiview video multi-track group that has the correct number of output views and whose extrinsic camera parameters suit the characteristics of the display that is used for rendering. The processing usually includes extracting the media data corresponding to the multi-track group from the file, potentially reformatting the extracted media data, and passing the reformatted media data to the decoder 160 for decoding and rendering.

A file editor according to various embodiments identifies multi-track groups from the file based on the respective indications included in the file. The file editor reads the information about the characteristics of the multi-track groups and their relations (common and differentiating attributes) between each other. Based on the characteristics and relations, the file parser chooses which multi-track groups are maintained in the file and which are removed. The file editor may e.g. choose such a multiview video multi-track group that has a desired number of output views for the target file. The file editor identifies the media data that is to be removed from the file and not maintained in the file. Then, the file editor removes such media data and the related file metadata. The file editor may also add media data into the file. If the media data relates to existing media data in the file or multi-tracks groups may be fored on the basis of the added media data, the file editor identifies multi-track groups from the coded media in the file. The file editor includes information which parts of the coded media bitstreams are included in a particular multi-track group in the file. The file editor may also indicate the relations between multi-track groups in the file.

Various embodiments described herein are described in the general context of method steps or processes, which may be implemented in one embodiment by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program modules may include routines, programs, objects, components, data structures, etc. that perform particular tasks or implement particular abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes.

Embodiments of the present invention may be implemented in software, hardware, application logic or a combination of software, hardware and application logic. The software, application logic and/or hardware may reside, for example, on a chipset, a mobile device, a desktop, a laptop or a server. Software and web implementations of various embodiments may be accomplished with standard programming techniques with rule-based logic and other logic to accomplish various database searching steps or processes, correlation steps or processes, comparison steps or processes and decision steps or processes. Various embodiments may also be fully or partially implemented within network elements or modules. It should be noted that the words "component" and "module," as used herein and in the following claims, is intended to encompass implementations using one or more lines of software code, and/or hardware implementations, and/or equipment for receiving matnual inputs..

## Claims

1. A method for processing a multi-view video bitstream in a plurality of tracks or track subsets (302), comprising:
storing said bitstream in a plurality of tracks or track subsets (302);
identifying one or more multi-track groups (304), each multi-track group (304) being identified based on grouping criteria including a relationship among one or more of the plurality of tracks (302), one or more of the plurality of track subsets (302), or one or more of the plurality of tracks and track subsets (302) and wherein said multi-track groups (304) correspond to bitstreams representative of different views of a scene;_and
using a multi-track group box (mvcg) to indicate relations between tracks or track subsets (302) included in a multi-track group (304),
**characterised in that** the method further comprises
forming at least one set of multi-track groups (306) based on grouping criteria including one or more joint characteristics of the multi-track groups (304) specified for multi-view video bitstreams and
indicating at least one relation between two or more multi-track groups (304) of said one set of multi-track groups (306), wherein said multi-track groups (304) include hierarchy partitionings or overlapping bitstream subsets.

2. The method of claim 1, wherein the relations between two or more sets multi-track groups (304) are indicated by a relation attribute box (ratr, mvra) contained in a multi-track group relation box (swtc).

3. The method of any of the claims 1-2, wherein the relations between tracks or track subsets (302) within a multi-track group 304 are indicated by a relation attribute box (ratr, mvra) contained in a multi-track group box (mvcg).

4. The method of claim 2, wherein forming at least one set of multi-track groups (306) comprises at least one of:
forming the at least one set of multi-track groups (306) based at least in part on common and/or differentiating characteristics from multi-view media rendering, coding or capturing point of view; and
forming the at least one set of multi-track groups (306) using a multi-track group relation box (swtc) to indicate relations between multi-track groups (304).

5. The method of claim 4, wherein, when using a multi-track group relation box (swtc) to indicate relations between multi-track groups (304), one or more criteria are used to indicate the type of grouping.

6. The method of claim 5, wherein a criterion indicates that only one of the multi-track groups (304) is to be processed at one time.

7. A computer-readable medium comprising a computer program, the computer program comprising computer-executable instructions which when executed by a processor cause the performance of the processes as in any of the claims 1 - 6.

8. An apparatus for processing a multi-view video bitstream in a plurality of tracks or track subsets (302), comprising:
a memory (58) for storing said bitstream and comprising computer program code; and
a processor (56),
the memory and the computer program code are configured to, working with the processor, cause the apparatus to perform at least the following:
store said bitstream in a plurality of tracks or track subsets (302);
identify one or more multi-track groups (304), each multi-track group (304) being identified based on grouping criteria including a relationship among one or more of the plurality of tracks (302), one or more of the plurality of track subsets (302), or one or more of the plurality of tracks and track subsets (302); and wherein said multi-track groups (304) correspond to bitstreams representative of different views of a scene; and
use a multi-track group box (mvcg) to indicate relations between tracks or track subsets (302) included in a multi-track group (304), **characterised in that** the memory (58) and the computer program code are configured to, working with the processor (56), cause the apparatus to perform at least the following:
form at least one set of multi-track groups (306) based on grouping criteria including one or more joint characteristics of the multi-track groups (304) specified for multi-view video bitstreams and
indicate at least one relation between two or more multi-track groups (304) of said one set of multi-track groups (306), wherein said multi-track groups (304) include hierarchy partitionings or overlapping bitstream subsets.

9. The apparatus according to claim 8, wherein the memory (58) and the computer program code configured to, working with the processor (56), further cause the apparatus to indicate the relations between two or more multi-track groups (304) in a relation attribute box (ratr, mvra) contained in a multi-track group relation box (swtc).

10. The apparatus according to any of the claims 8 and 9, wherein the memory (58) and the computer program code configured to, working with the processor (56), further cause the apparatus to indicate the relations between tracks or track subsets (302) within a multi-track group (304) in a relation attribute box (ratr, mvra) contained in a multi-track group box (mvcg).

11. The apparatus of any of the claims 8 - 10, wherein forming at least one set of multi-track groups (306) comprises:
forming the at least one set of multi-track groups (306) -based at least in part on common and/or differentiating characteristics from multi-view media rendering, coding or capturing point of view.

12. The apparatus of claim 11, wherein, when using a multi-track group relation box (swtc) to indicate relations between multi-track groups (304), one or more criteria being used to indicate the type of grouping.

13. The apparatus of claim 12, wherein a criterion indicates that only one of the multi-track groups (304) is to be processed at one time.

## Patentansprüche

1. Verfahren zum Verarbeiten eines Mehr-Ansicht-Video-Bitstroms in einer Mehrzahl von Spuren oder Spur-Teilsätzen (302), umfassend:
Speichern des Bitstroms in einer Mehrzahl von Spuren oder Spur-Teilsätzen (302);
Identifizieren einer oder mehrerer Mehr-Spur-Gruppen (304), wobei jede Mehr-Spur-Gruppe (304) basierend auf Gruppierungskriterien identifiziert wird, die eine Beziehung zwischen einer oder mehreren der Mehrzahl von Spuren (302), einer oder mehreren der Mehrzahl von Spur-Teilsätzen (302), oder einer oder mehreren der Mehrzahl von Spuren und Spur-Teilsätzen (302) beinhalten, und wobei die Mehr-Spur-Gruppen (304) zu Bitströmen korrespondieren, die repräsentativ sind für unterschiedliche Ansichten einer Szene; und
Nutzen einer Mehr-Spur-Gruppe-Box (mvcg), um Beziehungen zwischen Spuren oder Spur-Teilsätzen (302), die in einer Mehr-Spur-Gruppe (304) beinhaltet sind, anzugeben,
**dadurch gekennzeichnet, dass** das Verfahren des Weiteren umfasst:
Bilden zumindest eines Satzes von Mehr-Spur-Gruppen (306) basierend auf Gruppierungskriterien, die ein oder mehrere gemeinsame Eigenschaften der Mehr-Spur-Gruppen (304) beinhalten, die für Mehr-Ansicht-Video-Bitströme spezifiziert sind; und
Angeben zumindest einer Beziehung zwischen zwei oder mehr Mehr-Spur-Gruppen (304) des einen Satzes von Mehr-Spur-Gruppen (306), wobei die Mehr-Spur-Gruppen (304) Hierarchie-Partitionierungen oder überlappende Bitstrom-Teilsätze beinhalten.

2. Verfahren nach Anspruch 1, wobei die Beziehungen zwischen zwei oder mehr Mehr-Spur-Gruppen (304) durch eine Beziehung-Attribut-Box (ratr, mvra) angegeben werden, die in einer Mehr-Spur-Gruppe-Beziehung-Box (swtc) enthalten ist.

3. Verfahren nach einem der Ansprüche 1 bis 2, wobei die Beziehungen zwischen Spuren oder Spur-Teilsätzen (302) innerhalb einer Mehr-Spur-Gruppe (304) durch eine Beziehung-Attribut-Box (ratr, mvra) angegeben werden, die in einer Mehr-Spur-Gruppe-Box (mvcg) enthalten ist.

4. Verfahren nach Anspruch 2, wobei das Bilden zumindest eines Satzes von Mehr-Spur-Gruppen (306) zumindest einen der folgenden Schritte umfasst:
Bilden des zumindest einen Satzes von Mehr-Spur-Gruppen (306) basierend, zumindest teilweise, auf gemeinsamen und/oder differenzierenden Eigenschaften hinsichtlich eines Mehr-Ansicht-Medien-Renderings, einer Codierung oder einer Aufnahme; und
Bilden des zumindest einen Satzes von Mehr-Spur-Gruppen (306) unter Nutzung einer Mehr-Spur-Gruppe-Beziehung-Box (swtc), um Beziehungen zwischen Mehr-Spur-Gruppen (304) anzugeben.

5. Verfahren nach Anspruch 4, wobei, wenn eine Mehr-Ansicht-Gruppe-Beziehung-Box (swtc) genutzt wird, um Beziehungen zwischen Mehr-Spur-Gruppen (304) anzugeben, ein oder mehrere Kriterien genutzt werden, um die Art der Gruppierung anzugeben.

6. Verfahren nach Anspruch 5, wobei ein Kriterium angibt, dass nur eine der Mehr-Spur-Gruppen (304) zur gleichen Zeit zu verarbeiten ist.

7. Computerlesbares Medium, umfassend ein Computerprogramm, wobei das Computerprogramm auf einem Computer ausführbare Anweisungen umfasst, die, wenn sie durch einen Prozessor ausgeführt werden, die Durchführung der Prozesse wie in einem der Ansprüche 1 bis 6 bewirken.

8. Vorrichtung zum Verarbeiten eines Mehr-Ansicht-Video-Bitstroms in einer Mehrzahl von Spuren oder Spur-Teilsätzen (302), umfassend:
einen Speicher (58) zum Speichern des Bitstroms und umfassend einen Computerprogrammcode; und
einen Prozessor (56),
wobei der Speicher und der Computerprogrammcode ausgebildet sind, um, in Zusammenarbeit mit dem Prozessor, zu bewirken, dass die Vorrichtung zumindest die folgenden Schritte durchführt:
Speichern des Bitstroms in einer Mehrzahl von Spuren oder Spur-Teilsätzen (302);
Identifizieren einer oder mehrerer Mehr-Spur-Gruppen (304), wobei jede Mehr-Spur-Gruppe (304) basierend auf Gruppierungskriterien identifiziert wird, die eine Beziehung zwischen einer oder mehreren der Mehrzahl von Spuren (302), einer oder mehreren der Mehrzahl von Spur-Teilsätzen (302), oder einer oder mehreren der Mehrzahl von Spuren und Spur-Teilsätzen (302) beinhaltet, und wobei die Mehr-Spur-Gruppen (304) zu Bitströmen korrespondieren, die repräsentativ sind für unterschiedliche Ansichten einer Szene; und
Nutzen einer Mehr-Spur-Gruppe-Box (mvcg), um Beziehungen zwischen Spuren oder Spur-Teilsätzen (302), die in einer Mehr-Spur-Gruppe (304) beinhaltet sind, anzugeben,
**dadurch gekennzeichnet, dass** der Speicher (58) und der Computerprogramcode ausgebildet sind, um, in Zusammenarbeit mit dem Prozessor (56), zu bewirken, dass die Vorrichtung zumindest die folgenden Schritte durchführt:
Bilden zumindest eines Satzes von Mehr-Spur-Gruppen (306) basierend auf Gruppierungskriterien, die ein oder mehrere gemeinsame Eigenschaften der Mehr-Spur-Gruppen (304) beinhalten, die für Mehr-Ansicht-Video-Bitströme spezifiziert sind; und
Angeben zumindest einer Beziehung zwischen zwei oder mehr Mehr-Spur-Gruppen (304) des einen Satzes von Mehr-Spur-Gruppen (306), wobei die Mehr-Spur-Gruppen (304) Hierarchie-Partitionierungen oder überlappende Bitstrom-Teilsätze beinhalten.

9. Vorrichtung nach Anspruch 8, wobei der Speicher (58) und der Computerprogrammcode ausgebildet sind, um, in Zusammenarbeit mit dem Prozessor (56), des Weiteren zu bewirken, dass die Vorrichtung die Beziehungen zwischen zwei oder mehr Mehr-Spur-Gruppen (304) in einer Beziehung-Attribut-Box (ratr, mvra) angibt, die in einer Mehr-Spur-Gruppe-Beziehung-Box (swtc) enthalten ist.

10. Vorrichtung nach einem der Ansprüche 8 und 9, wobei der Speicher (58) und der Computerprogrammcode ausgebildet sind, um, in Zusammenarbeit mit dem Prozessor (56), des Weiteren zu bewirken, dass die Vorrichtung die Beziehungen zwischen Spuren oder Spur-Teilsätzen (302) innerhalb einer Mehr-Spur-Gruppe (304) in einer Beziehung-Attribut-Box (ratr, mvra) angibt, die in einer Mehr-Spur-Gruppe-Box (mvcg) enthalten ist.

11. Vorrichtung nach einem der Ansprüche 8 bis 10, wobei das Bilden zumindest eines Satzes von Mehr-Spur-Gruppen (306) umfasst:
Bilden des zumindest einen Satzes von Mehr-Spur-Gruppen (306) basierend, zumindest teilweise, auf gemeinsamen und/oder differenzierenden Eigenschaften hinsichtlich eines Mehr-Ansicht-Medien-Renderings, einer Codierung oder einer Aufnahme.

12. Vorrichtung nach Anspruch 11, wobei, wenn eine Mehr-Spur-Gruppe-Beziehung-Box (swtc) genutzt wird, um Beziehungen zwischen Mehr-Spur-Gruppen (304) anzugeben, ein oder mehrere Kriterien genutzt werden, um die Art der Gruppierung anzugeben.

13. Vorrichtung nach Anspruch 12, wobei ein Kriterium angibt, dass nur eine der Mehr-Spur-Gruppen (304) zur gleichen Zeit zu verarbeiten ist.

## Revendications

1. Procédé permettant de traiter un train de bits de vues vidéo multiples dans une pluralité de pistes ou de sous-ensembles de pistes (302), comprenant le fait de :
stocker ledit train de bits dans une pluralité de pistes ou de sous-ensembles de pistes (302) ;
identifier un ou plusieurs groupe(s) multipiste(s) (304), chaque groupe multipiste (304) étant identifié sur la base de critères de regroupement incluant une relation parmi l'une ou plusieurs de la pluralité de pistes (302), l'un ou plusieurs de la pluralité de sous-ensembles de pistes (302), ou l'un(e) ou plusieurs de la pluralité de pistes et de sous-ensembles de pistes (302) et dans lequel lesdits groupes multipistes (304) correspondent à des trains de bits représentatifs de vues différentes d'une scène ; et
utiliser un registre de groupes multipistes (mvcg) pour indiquer des relations entre des pistes ou des sous-ensembles de pistes (302) compris dans un groupe multipiste (304),
**caractérisé en ce que** le procédé comprend, de plus, le fait de :
former au moins un premier ensemble de groupes multipistes (306) sur la base de critères de regroupement comportant une ou plusieurs caractéristique(s) de liaison entre groupes multipistes (304) spécifiée(s) pour les trains de bits de vues vidéo multiples et
indiquer au moins une relation entre deux ou plusieurs ensembles de groupes multipistes (304) dudit premier ensemble de groupes multipistes (306), dans lequel lesdits groupes multipistes (304) comportent des segmentations par hiérarchie ou des sous-ensembles de trains de bits se chevauchant.

2. Procédé selon la revendication 1, dans lequel les relations entre deux ou plusieurs ensembles de groupes multipistes (304) sont indiquées par un registre d'attributs de relation (ratr, mvra) contenu dans un registre de relation entre groupes multipistes (swtc).

3. Procédé selon l'une quelconque des revendications 1 - 2, dans lequel les relations entre des pistes ou des sous-ensembles de pistes (302) à l'intérieur d'un groupe multipiste (304) sont indiquées par un registre d'attributs de relation (ratr, mvra) contenu dans un registre de groupes multipistes (mvcg).

4. Procédé selon la revendication 2, dans lequel former au moins un ensemble de groupes multipistes (306) comprend au moins l'un des faits consistant à :
former l'ensemble (les ensembles) de groupes multipistes (306) sur la base, au moins en partie, des caractéristiques communes et/ou de différentiation à partir d'un point de vue de la reproduction, de la saisie ou du codage des supports de vues multiples ; et
former l'ensemble (les ensembles) de groupes multipistes (306) en utilisant un registre de relations entre groupes multipistes (swtc) pour indiquer des relations entre des groupes multipistes (304).

5. Procédé selon la revendication 4, dans lequel, lorsqu'on utilise un registre de relations entre groupes multipistes (swtc) pour indiquer des relations entre des groupes multipistes (304), un ou plusieurs critère(s) est (sont) utilisé(s) pour indiquer le type de regroupement.

6. Procédé selon la revendication 5, dans lequel un critère indique que seul l'un des groupes multipistes (304) doit être traité à la fois.

7. Support exploitable par ordinateur comprenant un programme d'ordinateur, le programme d'ordinateur comportant des instructions pouvant être exécutées par ordinateur qui, lorsqu'elles sont exécutées par un processeur, entraînent l'exécution des procédés selon l'une quelconque des revendications 1 à 6.

8. Dispositif permettant de traiter un train de bits de vues vidéo multiples dans une pluralité de pistes ou de sous-ensembles de pistes (302), comportant :
une mémoire (58) pour stocker ledit train de bits et comportant un code de programme d'ordinateur ; et
un processeur (56),
la mémoire et le code de programme d'ordinateur sont configurés pour, en agissant avec le processeur, entraîner le dispositif à exécuter au moins ce qui suit :
stocker ledit train de bits dans une pluralité de pistes ou de sous-ensembles de pistes (302) ;
identifier un ou plusieurs groupe(s) multipiste(s) (304), chaque groupe multipiste (304) étant identifié sur la base de critères de regroupement incluant une relation parmi l'une ou plusieurs de la pluralité de pistes (302), l'un ou plusieurs de la pluralité de sous-ensembles de pistes (302), ou l'un(e) ou plusieurs de la pluralité de pistes et de sous-ensembles de pistes (302) ; et dans lequel lesdits groupes multipistes (304) correspondent à des trains de bits représentatifs de vues différentes d'une scène ; et
utiliser un registre de groupes multipistes (mvcg) pour indiquer des relations entre des pistes ou des sous-ensembles de pistes (302) inclus dans un groupe multipiste (304), **caractérisé en ce que** la mémoire (58) et le code de programme d'ordinateur sont configurés, en fonctionnement avec le processeur (56), pour entraîner le dispositif à exécuter au moins ce qui suit :
former au moins un ensemble de groupes multipistes (306) sur la base de critères de regroupement comprenant une ou plusieurs caractéristiques de liaison entre groupes multipistes (304) spécifiée(s) pour des trains de bits de vues vidéo multiples ; et
indiquer au moins une relation entre deux ou plusieurs groupes multipistes (304) dudit ensemble de groupes multipistes (306) dans lequel lesdits groupes multipistes (304) incluent des segmentations par hiérarchie ou des sous-ensembles de trains de bits se chevauchant.

9. Dispositif selon la revendication 8, dans lequel la mémoire (58) et le code de programme d'ordinateur configuré , en fonctionnement avec le processeur (56), pour entraîner, de plus, le dispositif à indiquer les relations entre deux ou plusieurs groupes multipistes (304) dans un registre d'attributs de relations (ratr, mvra) contenu dans un registre de relations entre groupes multipistes (swtc).

10. Dispositif selon l'une quelconque des revendications 8 et 9, dans lequel la mémoire (58) et le code de programme d'ordinateur sont configurés, en fonctionnement avec le processeur (56), pour entraîner, de plus, le dispositif à indiquer les relations entre des pistes ou des sous-ensembles de pistes (302) à l'intérieur d'un groupe multipiste (304) dans un registre d'attributs de relations (ratr, mvra) contenu dans un registre de groupes multipistes (mvcg).

11. Dispositif selon l'une quelconque des relations 8 à 10 dans lequel la formation d'au moins un ensemble de groupes multipistes (306) comprend le fait de :
former l'ensemble (les ensembles) de groupes multipistes (306) sur la base, au moins en partie, des caractéristiques communes et/ou de différentiation à partir d'un point de vue de la reproduction, de la saisie ou du codage des supports de vues multiples.

12. Dispositif selon la revendication 11, dans lequel, lorsqu'il utilise un registre de relations entre groupes multipistes (swtc) pour indiquer des relations entre des groupes multipistes (304), un ou plusieurs critère(s) est (sont) utilisé(s) pour indiquer le type de regroupement.

13. Dispositif selon la revendication 12, dans lequel un critère indique que seul l'un des groupes multipistes (304) doit être traité à la fois.
